(19) **Europäisches Patentamt**

**European Patent Office**

**Office européen des brevets**

(11) **EP 1 011 065 B1**

(12) **EUROPEAN PATENT SPECIFICATION**

(45) Date of publication and mention
of the grant of the patent:
**01.03.2006 Bulletin 2006/09**

(51) Int Cl.:
**G06K 9/64** (2006.01)

(21) Application number: **99203156.7**

(22) Date of filing: **27.09.1999**

(54) **Template matching using correlative auto-predictive search**

Standardmustervergleichung durch Korrelation und Vorhersagung

Comparaison à des motifs standards en utilisant corrélation et prédiction

(84) Designated Contracting States:
**AT BE CH CY DE DK ES FI FR GB GR IE IT LI LU
MC NL PT SE**
Designated Extension States:
**AL LT LV MK RO SI**

(30) Priority: **18.12.1998 US 216692
18.12.1998 US 216691**

(43) Date of publication of application:
**21.06.2000 Bulletin 2000/25**

(73) Proprietor: **University of Washington
Seattle, WA 98195 (US)**

(72) Inventors:
• **Sun, Shijun
Seattle, WA 98105 (US)**
• **Kim, Yongmin
Seattle, WA 98155 (US)**
• **Park, Hyun Wook
Shoreline, WA 98133 (US)**

(74) Representative: **Prins, Adrianus Willem et al
Vereenigde,
P.O.Box 87930
2508 DH Den Haag (NL)**

(56) References cited:
• **ETTELT E. ET AL.: "Optimised Template Trees for
Appearance Based Object Recognition" IEEE
INTERNATIONAL CONFERENCE ON SYSTEMS,
MAN, AND CYBERNETICS, 11 - 14 October 1998,
pages 4536-4541, XP000890033 San Diego, USA**
• **XIABO LI ET AL.: "The First Stage in Two-Stage
Template Matching" IEEE TRANSACTIONS ON
PATTERN ANALYSIS AND MACHINE
INTELLIGENCE., vol. PAMI-7, no. 6, November
1985 (1985-11), pages 700-707, XP002132498
IEEE INC. NEW YORK., US ISSN: 0162-8828**
• **PAGLIERONI D W ET AL: "THE
POSITION-ORIENTATION MASKING APPROACH
TO PARAMETRIC SEARCH FOR TEMPLATE
MATCHING" IEEE TRANSACTIONS ON PATTERN
ANALYSIS AND MACHINE INTELLIGENCE, US,
IEEE INC. NEW YORK, vol. 16, no. 7, 1 July 1994
(1994-07-01), pages 740-747, XP000454192 ISSN:
0162-8828**
• **XU XINPING: "REAL TIME IMPLEMENTATION OF
TWO STAGE SEARCH" US, NEW YORK, IEEE, vol.
-, 1988, pages 1006-1008, XP000118206 ISBN:
7-80003-039-3**
• **VIITANEN J ET AL: "HIERARCHICAL PATTERN
MATCHING WITH AN EFFICIENT METHOD FOR
ESTIMATING ROTATIONS" PROCEEDINGS OF
THE INTERNATIONAL CONFERENCE ON
INDUSTRIAL ELECTRONICS, CONTROL, AND
INSTRUMENTATION. (IECON), US, NEW YORK,
IEEE, vol. -, 1987, pages 731-736, XP000118018**
• **HEYWOOD, J.: "Shift and Correlate Pattern
Recognition for Machine Vision Inspection"
COMPUTERS IN MECHANICAL ENGINEERING
(CIME), vol. 5, no. 6, 1987, XP002132499
SPRINGER VERLAG NEW YORK INC. NEW
YORK., US**

EP 1 011 065 B1

## Description

## BACKGROUND OF THE INVENTION

This invention relates to template matching within a data domain, and more particularly to a method for locating a given data template within a data domain.

Template matching in the context of an image search is a process of locating the position of a subimage within an image of the same, or more typically, a larger size. The subimage is referred to as the template and the larger image is referred to as the search area. The template matching process involves shifting the template over the search area and computing a similarity between the template and the window of the search area over which the template lies. Another step involves determining a single or a set of matched positions in which there is a good similarity measure between the template and the search area window.

A common technique for measuring similarity in template matching and image registration is cross-correlation. A correlation measure is determined between the template and respective windows of the search area to find the template position which has maximum correlation. For a two-dimensional search area the correlation function generally is computed for all translations of the template within the search area. A statistical correlation measure is a common approach in which window areas are spatially convolved with the template using spatial filter functions. Because this approach is extremely expensive in terms of computation time, a more common computer implementation is to use a sum of absolute differences.

Rosenfeld et al., in "Coarse-Fine Template Matching," IEEE Transactions on Systems, Man and Cybernetics (February 1977, pp. 104-107) describe an approach where a 'reduced-resolution' template is used during a first, coarse evaluation stage. The template is divided into blocks of equal size (e.g., 'm' pixels per block). The average of each block is computed. For each pixel of the search area an average also is calculated over a neighborhood of the same size as the reduced-resolution template (e.g., m pixels). The average absolute difference between each template block average and the picture neighborhood average then is computed for each pixel of the search area. If the average absolute difference for any pixel of the search area is below a select value, then a possible match has been identified. Next, the full resolution template is compared to a window of the search area about each pixel point where the average absolute difference in the prior coarse evaluation step was below the threshold value. This fine evaluation step identifies if there actually is a good correlation.

Goshtasby et al. in "A Two-Stage Correlation Approach to Template Matching," IEEE Transaction on Pattern Analysis and Machine Intelligence, (Vol. PAMI-6, No. 3, May 1984), note the need for an accurate threshold value for the first stage evaluation. They describe a method for deriving the threshold value based upon subtemplate size and false dismissal probability.

The coarse-fine or two stage method subsample the template to match with the image. The task of subsampling the template is not a trivial task and contributes significant processing cost. In addition, the false alarms result in wasted, or an ineffective use of, processing time. Accordingly, there is a need for a more efficient method of template matching.

In the area of motion estimation for digital video and multimedia communications a three stage correlation strategy is used. In a first step, a search step size of 4 is used. Once a maximum point is found, the step size is reduced to 2 to evaluate the neighborhood of the previously determined point to choose the next search point. The third step is to search all neighboring points to find the best match. This approach speeds up the search process, but also has a high probability of mismatches or suboptimal matches. It also has difficulty handling cases in which multiple match points occur.

J. Viitanen et al.: "Hierarchical pattern matching with an efficient method for estimating rotations", Proceedings of the International Conference on Industrial Electronics, Control, and Instrumentation (IECON), IEEE, New York, USA, 1987, pp. 731 - 736, deals with template matching on the basis of a chamfer transform. In a first stage, low resolution templates are used. A step size for matching is derived from the hierarchical resolution of the distance image.

There is a need for a more reliable, fast search method for correlating a template to windows of a search area. Further, there is a need for performing a search among 3 data dimensions using either a two dimensional.

## SUMMARY OF THE INVENTION

According to the invention, a correlation auto-predictive search ('CAPS') method is used to compare a template to windows of a search area. The location(s) where the template has the highest correlation coefficient with the underlying window is selected as a match for the template. Local maximum criteria or other criteria then are used to select one or more match points within the search area. The principle of a correlation auto-predictive search as conceived by the inventors is (1) to extract statistical information from the template itself to determine the search step size, and (2) to perform fast searching based on this extracted information. Searching is performed by correlating the template to various windows of a search area. The windows are selected along 2 dimensions ('2-D') for 2-D CAPS searching. The windows are selected along 3 dimensions ('3-D') for 3-D CAPS searching. A 3-dimensional correlation auto-predictive search (3-D CAPS) method is used to compare a 2-dimensional template to various 2-dimensional windows of a search area. Aspects of two-dimensional correlative auto-predictive searching and three-dimensional auto-predictive searching are disclosed.

For a 2 dimensional search area two of the dimensions for selecting windows are the two dimensions of the search area. A third dimension corresponds to searches among manipulations of the search area and template or additional slices of the search area. In one embodiment the template is rotated relative to the search area. In such embodiment the third dimension is rotation. In another embodiment the template is scaled (e.g., zooming in or out) relative to the search area. In such embodiment the third dimension is scaling factor. In another embodiment the template and the search area are subsampled to vary the resolution of each. In such embodiment the third dimension is subsampling factor (i.e., resolution). Each of such examples correspond to manipulations of the search area relative to the template, these manipulations may result in additional slices of the search area, in which the search area content is manipulated (e.g., rotated, scaled or subsampled). In other embodiments the third dimension is time, frequency or space. For example, subsequent frames of the subject matter of the search area may be captured over time. In another example, additional samplings of the subject matter of the search area are captured for differing frequencies. In yet another example the subject matter is captured in three spatial dimensions resulting in a three dimensional search area.

Steps sizes are derived along two dimensions for 2-D CAPS and along 3 dimensions for 3-D CAPS. According to another aspect of this invention, once step sizes are derived a fast search is performed between the template and the search area using the derived step sizes. The step sizes determine which windows into the search area (or into manipulations or slices of the search area) are tested. Testing includes calculating a correlation coefficient between the selected window and the template. For correlations having a correlation coefficient exceeding a specific value, a more exhaustive, full search is performed locally in the vicinity of the selected window to see if a better match is found.

2-D CAPS Step Sizes:

According to one aspect of the invention, during a first analytical step, autocorrelation is performed on the template to generate desired statistics. To use autocorrelation, the original template is padded with additional pixels to increase the template size. In one approach, where the search area is assumed to be periodic, circular padding is used. In such approach the padded template is an array of copies of the original template. This increases the template size to the search area (image) size.

In another approach linear padding is used in which pixels are added around the original template to increase the size of the template to the search area (image) size. According to an aspect of this invention, a mean pixel value of the original template is used as a padding constant (i.e., pixel value for the added pixels). Alternatively, a value of zero or another fixed value may be used as the padding constant for the padded pixels.

After generating the padded template, cross-correlation is performed between the padded template and the original template. The autocorrelation is highest at the center of the padded template as this area is formed by the original template. This corresponds to a peak in a graph of the autocorrelation of the padded template to original template. The width of the peak, either along a horizontal direction of the padded template, or along a vertical direction of the padded template, may be measured. The height of the maximum peak is 1.0. The horizontal width is taken as the distance along the horizontal axis between autocorrelation values of 0.5 to each side of the maximum peak. Similarly, the vertical width is taken as the distance along the vertical axis between autocorrelation values of 0.5 to each side of the maximum peak. Such value, 0.5, is referred to herein as the cut value. The cut value may differ.

According to another aspect of the invention, the autocorrelation between the padded template and the original template is not calculated for every point of the padded template. At the center of the padded template, the correlation is known to be 1.0 because the original template is located at such center of the padded template. The correlation then is derived about the center of the padded template along both horizontal and vertical axes. As the correlations are derived during this stepping along the axes, there comes a point where the correlation decreases to the cut value. Along the horizontal axis, there is a cut value reached to either direction of center. The horizontal distance between these two locations where the correlation has decreased to the cut value is the horizontal width. Further correlations along such axis need not be derived. Along the vertical axis, there also is a cut value reached to either direction of center. The vertical distance between these two locations where the correlation has decreased to the cut value is the vertical width. Further correlations along such vertical axis need not be derived. Thus, correlation coefficients are derived only for the steps along the axes away from center, and only to the step where the cut value is reached.

Next, horizontal step size and vertical step size are derived from the horizontal width and vertical width, respectively. In one embodiment the horizontal step size is 0.5 times the horizontal width. Similarly, a vertical step size is 0.5 times the vertical width. These step sizes are the 2-D correlative auto-predictive search (CAPS) step sizes.

3-D CAPS Step Size:

The horizontal and vertical step sizes are used for moving along the two linear dimensions of the search area to select windows to be tested. According to another aspect of the invention, a third dimensional analysis also is performed. For the third dimensional analysis a 2-dimensional search area (such as a 2-dimensional image) is analyzed for variation in rotation, scaling or resolution.

In a sense the 2-dimensional search area becomes a three dimensional search area in which the search area slices along the third axis correspond to one of: (1) rotated copies of the original search area, (2) scaled size copies of the original search area, or (3) altered resolution copies of the original search area. In still another embodiment, the search area is a 3-dimensional search area (e.g., a 3-dimensional image). For any of these third dimensional analyses a third CAPS step size is derived, (e.g., rotational step size, scaling step size, resolution step size or z-axis step size).

According to another aspect of the invention, step size for a rotational dimension is derived by calculating correlation coefficients between the padded template and the original template at various rotations of the padded template relative to the original template (along the x=0 and y=0 axis -- the center of the padded template). At zero rotation the correlation coefficient is known to be one because the original template forms the center of the padded template. The original template is rotated in both positive and negative angular directions about the center. For each increment of rotation along a given angular direction a correlation coefficient is calculated. At some point the correlation coefficient will be the cut value (e.g., 0.5). The angular rotation spanning between the rotational angle along the positive rotation direction where the cut value is reached and the rotational angle along the negative rotation direction where the cut value is reached is the rotational width. In one example, one-half this rotational width is the CAPS rotational step size.

According to another aspect of the invention, step size for a scaling dimension is derived by calculating a correlation coefficient between the padded template and original template for various scalings of the original template relative to the padded template. The original template is relatively scaled from decreasing size to increasing size. The range of scaling is limited so that the relatively-scaled template is no larger than the padded template. The correlation coefficient is calculated between the scaled template and the padded template for several scaling factors in the decreasing and the increasing direction. When decreasing the scale of the template, a correlation coefficient corresponding to the cut value (e.g., 0.5) is reached for a given scaling factor. Similarly, when increasing the scale of the template, a correlation coefficient corresponding to the cut value (e.g., 0.5) is reached for a given scaling factor. The scaling width corresponds to the distance along the scaling axis between the correlation coefficients at the cut value. Since, the distance in the increasing direction may differ along the scaling axis from the distance along the decreasing direction, the scaling step size preferably is taken as the smaller of the two distances. In an alternative embodiment the scaling step size is the scaling width divided by two.

According to another aspect of the invention, step size for a subsampling resolution dimension is derived by calculating a correlation coefficient between the padded template and original template for various resolution-altered copies of the original template and padded template. The original template is sampled at a specific resolution. The padded template is sampled at the same resolution. The correlation coefficient is calculated between the original template and the padded template at the sampled resolution. This is repeated for several resolutions. In addition, at each resolution multiple correlation coefficients are derived. This is because when subsampling one data point is used to represent nxn data points. The correlation may differ depending on which of the nxn data points is used (or what interpolation of the points is used). The minimum correlation is considered for analysis. For a plot of the minimum correlation coefficient versus resolution, the minimum correlation is the highest at the center of the padded template for the original resolution. Moving along the resolution axis of the plot, the minimum correlation coefficient decreases to the cut value for some resolution sampling factor. Such resolution is the resolution step size.

2-D Template Matching:

Once the 2-D CAPS step sizes are derived, a fast search is performed between the template and the search area using the derived step sizes. For correlations having a correlation coefficient exceeding a specific value, a full search is performed locally in each area where the fast search resulted a correlation coefficient exceeding the select value.

According to another aspect of the invention, the fast search is performed as a set of correlations between the original template and the search area. Specifically, a correlation is performed between the template and a window area within the search area. The set of correlations is selected by choosing window areas based upon the step size. For example, one window is the center of the search area. A positive or negative step then is taken along an axis using the corresponding horizontal width or vertical width to derive a correlation for another window. Any of the correlations which result in a correlation coefficient exceeding a specific value is considered a local match point.

According to another aspect of this invention, the specific value used to identify a local match during the fast search is the cut value times a threshold value. The cut value is the same cut value used during the first analytical step described above, to derive statistics from the template. The threshold value is assigned based upon image characteristics. Typical threshold values are between 0.8 and 0.9.

One or more locations are identified as local match points based upon the whether the correlation coefficient between the template and that location exceed the specific value (e.g., cut value times threshold value).

According to another aspect of the invention, a full search then is performed in the vicinity of any location which is a local match. A full search of such vicinity encompasses performing a correlation between the template and every potential search area window between the local match location window and the windows at the prior and next step in each of the horizontal and vertical axes. For example, if the horizontal step size is 3 pixels and the vertical step size is 4 pixels, then correlations are performed for windows ± 1 pixel and ± 2 pixels along the horizontal axis and ± 1 pixel, ± 2 pixels and ± 3 pixels along the vertical axis. In addition correlations are performed for windows off the axes within the area delineated by the step sizes. Thus, the full search of the vicinity of the local match for this example includes 34 correlations between the template and the search area. Any locations among the local match locations and the locations tested during the full search of the vicinity which exceed the threshold value are considered template matches. In some embodiments, the only the location having the highest correlation is considered a match. In other embodiments there may be multiple matches. Thus, the top matches or all matches above the threshold are selected as resultant matches.

3-D Template Matching:

Once the 3-D CAPS step sizes are derived, a fast search is performed. According to another aspect of the invention, matches are identified between the original template and the search area (image) using the three CAPS step sizes to select windows and a specific value of the correlation. The specific value used to identify a local match during the fast search is the cut value times a threshold value. The cut value is the same cut value used during the first analytical step described above, to derive statistics from the template. The threshold value is assigned based upon search area / image characteristics. Typical threshold values are between 0.8 and 0.9.

For a third dimension of the search, the search area is manipulated or resampled to include multiple slices (in effect a three dimensional set of data paints). Each slice corresponds to the search area in the third dimension (e.g., rotations scalings, subsampled copies). The potential number of slices depends on the resolution for the rotational angle, the scaling factor or the subsampling factor. Using the third-axis step size (e.g., rotation, scaling factor, subsampling factor), a subset of these potential slices are considered during the fast search. For example, of 300 potential slices where a third axis step size is 4, a subset of 75 slices is considered during the fast search.

Within each slice among the subset of slices, correlation coefficients are derived by selecting windows using the horizontal and vertical step sizes. Where the correlation coefficient equals at least the cut value times the threshold value, the location is used for another stage of evaluation. These locations are referred to herein as candidate locations and the slice from which this location was identified is referred to as its home slice.

At the next stage, the candidate locations identified in the fast search stage are projected onto neighboring slices of the search area within the full set of slices. For any given candidate location processed in the second stage, the neighboring slices include slices area less than the third dimension step size away from the home slice. Consider an implementation in which there are 300 potential rotations of the search area. Thus, there are 300 slices in the full set. Given an exemplary third dimension step size of 4 during the fast search stage, there are 75 slices in the first subset of slices. During stage two a given candidate location is projected onto the neighboring 3 slices to each direction of its home slice within the full set of slices. (Note that the 4th slice would have been the next slice in the subset of slices). The correlation coefficients for these points in these multiple neighboring slices (e.g., 6) then are calculated. If the coefficient is greater than one-half the threshold value for any of these neighboring slices, then the location for such slice becomes a candidate location also, and such slice is its home slice.

At the final stage, a local full search, correlation coefficients are derived for locations in the vicinity of each candidate location on the candidate location's home slice. The vicinity of a candidate location includes windows on the home slice that are less than a horizontal and vertical step size away from the candidate location. For example, if the horizontal step size is 2 and the vertical step size is two, then there are 8 locations (windows) in the vicinity of the candidate location, (e.g., window coordinate offsets of (-1,0), (1,0), (0.1), (0.-1), (-1,1), (1,-1), (-1,-1), and (1,1) relative to the candidate location). Coefficients which meet the threshold value are match points. A match point identifies a window of the search area matching the template.

One advantage of the invention is that template matches are found more quickly and with greater reliability than prior correlation search methods. In particular, this search methodology is more tolerant of noise and offsets of the template as demonstrated empirically by forming a search area from copies of templates altered by low pass filtering or Gaussian noise. These and other aspects and advantages of the invention will be better understood by reference to the following detailed description taken in conjunction with the accompanying drawings.

## BRIEF DESCRIPTION OF THE DRAWINGS

Fig. 1 is a block diagram of a host computer system for implementing the method embodiments of this invention;
Fig. 2 is a diagram of a template and search area;
Fig. 3 is a block diagram of a template and search area for a 3-dimensional search along two linear axes and a rotational axis;

Fig. 4 is a block diagram of a template and search area for a 3-dimensional search along two linear axes and a scaling axis;

Fig. 5 is a block diagram of a template and search area for a 3-dimensional search along two linear axes and a sampled resolution axis;

Fig. 6 is a block diagram of a template and search for a 3-dimensional search;

Fig. 7 is a flow chart of a process for determining CAPS step sizes according to an embodiment of this invention;

Fig. 8 is a diagram of a circularly padded template;

Fig. 9 is a diagram of a linearly padded template;

Fig. 10 is a graph of a cross-sectional portion of the correlation between the template and the padded template of Fig. 8 or 9;

Fig. 11 is a diagram of a rotational step within a padded template;

Fig. 12 is a graph of the correlation between the template and the padded template versus indexed scaling factor;

Fig. 13 is a graph of the correlation between the template and the padded template versus subsampling factor;

Fig. 14 is a diagram of multiple slices of the search area of Fig. 6;

Fig. 15 is a diagram depicting stepping within the neighborhood of a candidate window for a given slice of Fig. 14;

Fig. 16 is a diagram of the window center points about which the template is overlaid during a local full search within the slice of Fig. 15;

Fig. 17 is a diagram of a search area of data points with a window area to be tested against a template;

Fig. 18 is a flow chart of a process for performing a fast search of the search area to identify local matches between a template and a subset of window areas of the search area;

Fig. 19 is a diagram depicting step sizes for selecting windows of the search area to be tested during the fast search process;

Fig. 20 is a diagram of the search area of Fig. 17 showing a window identified as a local template match; and

Fig. 21 is a diagram of center data points for windows in the vicinity of the local template match to be tested for a better match (also shown are center points for nearby windows tested during the fast search).

## DESCRIPTION OF SPECIFIC EMBODIMENTS

### Exemplary Host Computer System

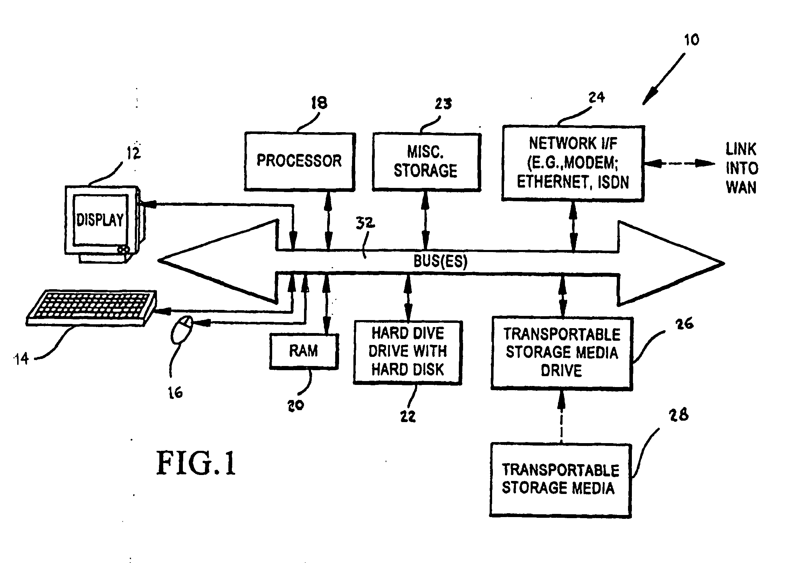

The functions of the present invention preferably are performed by programmed digital computers of the type which are well known in the art, an example of which is shown in Fig. 1. A computer system 10 has a display monitor 12, a keyboard 14, a pointing/clicking device 16, a processor 18, random access memory (RAM) 20, a non-volatile storage device such as a hard disk drive 22, a miscellaneous storage device 23, a communication or network interface 24 (e.g., modem; ethernet adapter), and a transportable storage media drive 26, such as a floppy disk drive, CD-ROM drive, zip drive, bernoulli drive or other magnetic, optical or other storage media, which reads transportable storage media 28. The various components interface and exchange data and commands through one or more busses 32. The computer system 10 receives information by entry through the keyboard 14, pointing/clicking device 16, the network interface 24 or another input device or input port. The computer system 10 may be any of the types well known in the art, such as a mainframe computer, minicomputer, or microcomputer.

### Overview

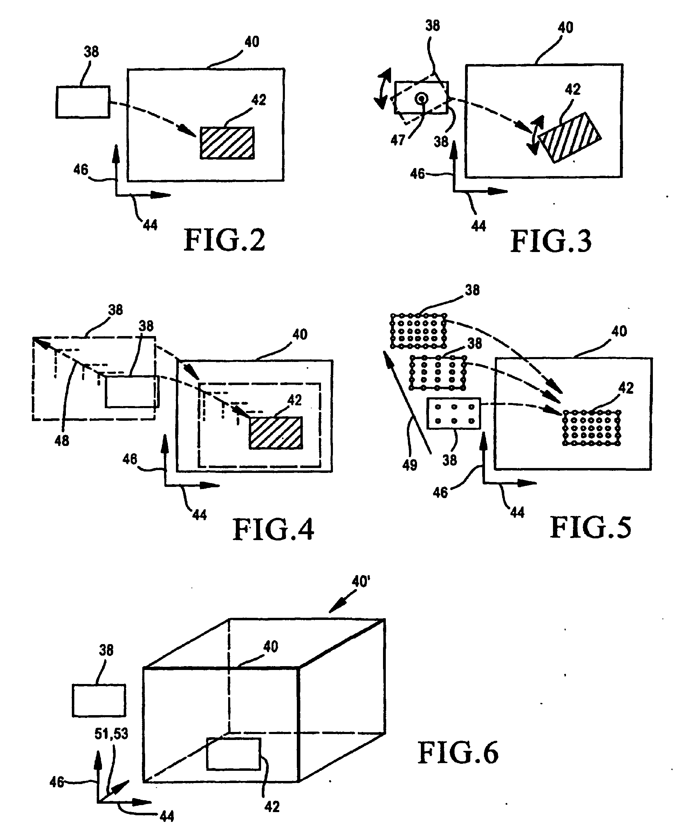

Referring to Fig. 2, to search for the location of a template 38 of data within a search area 40 of data, the template is overlaid onto a window 42 of the search area. The search area 40 is an image or another domain of data points. The window area 42 is a subportion of the search area. The template 38 also include a set of data points. The template data points are compared to the window's data points to determine if the data points correlate to a desired degree. If they do, then a match for the template has been found. In a search area 40 formed by 'm' rows of 'n' data points, a template formed by 'k' rows of 'p' data points may be translated along axes 44, 46 over (m-k+1) * (n-p+1) potential windows 42. For 3-dimensional analysis even more orientations may be formed between the template 38 and the search area 40.

To reduce the number of windows 42 that the template 38 is compared with, effective axial step sizes are derived from the template. For a two-dimensional search a step size along a first axis 44 is derived and a step size along a second axis 46 is derived. For a three dimensional search a step size along a third axis also is derived. Rather then compare the template to every possible window of the search area 40, the template 38 is moved along axes by corresponding axial step sizes.

Once the desired step sizes are derived, then the template 38 is compared to the various windows 42 of the search area 40 at the step size increments. In one embodiment the comparison is a correlation function of the template 38 and the window 42 and results in a correlation coefficient. Any window 42 in which the correlation coefficient with the template 38 is found to exceed a select value is a potential match for the template. In a preferred embodiment the select value equals the cut value times a threshold value. The threshold value is selected based upon the type of search area. Exemplary values are 0.8 to 0.9 although higher values less than one or lower values greater than the cut value may be used.

Exemplary third axes include a rotational axis, a scaling axis, a sampled resolution axis, a third spatial axis, a time axis, and a frequency axis. In each case the search area includes a third dimensional set of data points. For the rotational, scaling, and sampled resolution embodiments, the third dimensional points are manipulations of the original 2-dimensional search area. The 2-d search area is rotated, scaled or sampled at a resolution. For the third spatial axis, time axis and frequency axis embodiment, the third dimensional data points corresponds to additional frames of data corresponding to the search area. In one embodiment additional 2-d spatial slices of a 3-d image along a z-axis are obtained. In another embodiment additional 2-d slices of the search area are obtained at different times. In still another embodiment additional 2-d slice of the search area are obtained for different frequencies.

Referring to Fig. 3, the template 38 may be rotated relative to the search area 40 at various rotational offsets about a rotational axis 47. In this example the third axis corresponds to rotated slices of the sample area. Referring to Fig. 4, the template 38 may be scaled relative to the search area 40 along a scaling axis 48. In this example, the third axis corresponds to scalings of the search area. Referring to Fig. 5, the template 38 and search area 40 may be sampled at varying sample resolutions. In this example the third axis 49 corresponds to sampled resolution of the search area. Referring to Fig. 6, the search area 40 includes additional frames of data points along a third axis 51 corresponding to a third linear axis, samplings at different times or samplings at different frequencies.

In summary, the 3-D CAPS method includes searching for a match between the template 38 among a 3-dimensional sample space 40' in which the at least two axes 44, 46 are spatial axes and the third axis 53 corresponds to manipulations of the 2-D search area (relative to the template 38) or to additional frames of the 2-d search area 40 subject matter (see Fig. 6).

## Determining Step Size for Horizontal and Vertical Axes

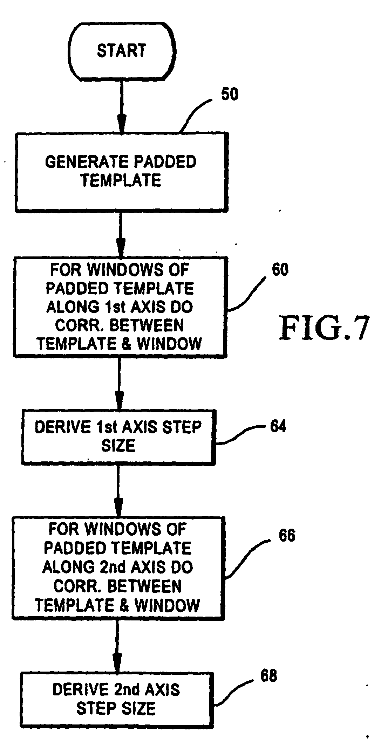

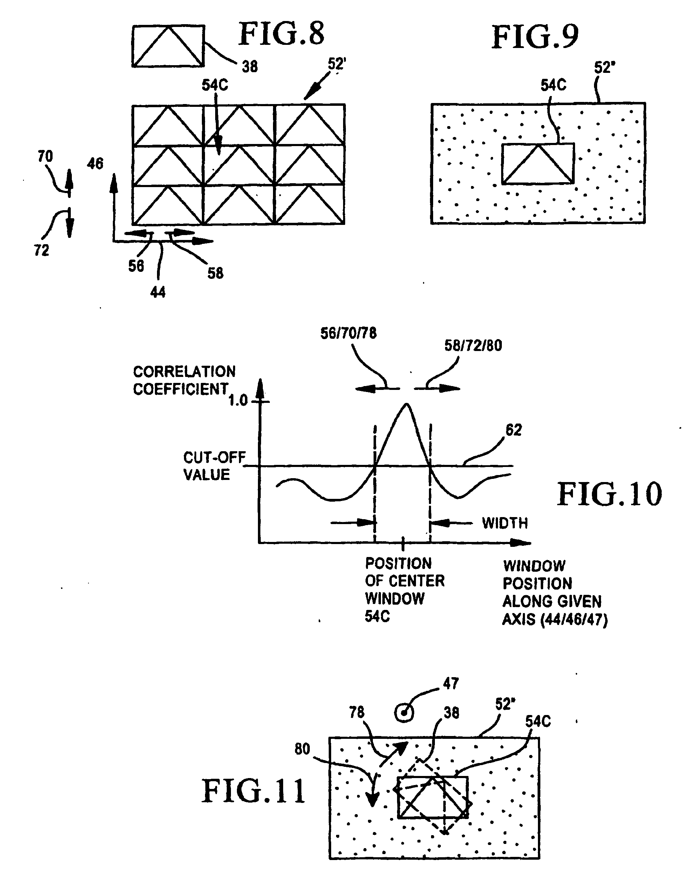

To determine effective step sizes, the template 38 itself is analyzed. Referring to Fig. 7, at a first step 50 the template 38 is padded with additional data points to achieve a padded template. Fig. 8 shows an example of a padded template 52' achieved by circular padding. For circular padding, multiple copies of the template 38 are used to increase the template size. In the illustrated embodiment an array of 9 copies of the original template 38 are used with a center window 54c of the padded template 52' being the original template 38. The number of copies may vary for differing embodiments. In a preferred embodiment there are at least 9 full copies of the template in the circularly padded template.

Fig. 9 shows an example of a padded template 52" achieved by linear padding. For linear padding, data points are added in which each data point has a common value. The common value is a padding constant. In one embodiment the padding constant may be 0 or another fixed value. In a preferred embodiment the padding constant is derived from the data values of the various data points which make up the template 38. For example, in one embodiment an average data value is derived for all the temple 38 data points using any of various averaging techniques. This average value serves as the padding constant. For image data, the added data points are pixels and the padding constant is a pixel intensity and/or color. Preferably the center window 54c of the padded template 52" formed by linear padding also is formed by the original template 38.

Referring again to Fig. 7, at another step 60 the template 38 is correlated to various windows 54 of the padded template. Because the center of the padded template equals the original template 38, it is known that the correlation between the template 38 and the center window 54c is 1.0. Thus, that correlation need not be calculated. It is already known. For a two dimensional analysis, a correlation between the original template 38 and windows 54 of the padded template are derived for windows along either of such axes 44, 46 moving in either direction away from the center window 54c. The step size for selecting adjacent window to evaluate is one data point. Consider for example a template which is 40 pixels by 60 pixels and a padded template which is 120 pixels by 180 pixels. The step size is one pixel. Starting from the center window 54c, there are 40 potential windows in a first direction 56 along the first axis 44 and 40 potential windows in a second direction 58 along the same axis 44. In step 60 a correlation is performed between the template and the select windows. As the selected window 54 changes along the first axis 44 in a first direction 56, the resulting correlation coefficient is likely to decrease below 1.0. Eventually there will be a window where the correlation coefficient falls to a prescribed cut value. Such cut value may vary for differing embodiment, but preferably is less than a threshold value which identifies an estimated match between a window and the template. A window will be found in the padded template in each direction along axis 44 where the cut value is met.

Referring to Fig. 10, a graph of correlations between the padded template and the template 38 along the first axis 44 shows a peak at the center and lesser values away from the center. The prescribed cut value is indicated as line 62. Line 62 intersects with at least two points on the correlation function. For circular padding there is likely to be more than 1 peak. The closest data point to each side of the maximum peak is used to measure a width along the first axis 44.

Rather than perform a correlation for each potential window along the first axis 44, correlations are performed for windows along the axis 44 away from the center window in each direction 56, 58 until a window is identified in such direction where the correlation coefficient intersects the cut value. For two dimensional analysis, there is a cut point found in each direction from the center window 54c along the first axis 44. The distance between those two windows in data points is the width along the first axis.

Referring to Fig. 7, at step 64 the first axis step size is derived from the width along the first axis 44 between windows which have a correlation to the template 38 equal to or less than the prescribed cut value. The step size along the first axis 44 is a fraction of the width. In a preferred embodiment, one-half the width is taken as the step size for the given axis. In other embodiments, the step size is taken as the entire width or some other fraction of the width.

In steps 66 and 68 the correlations are repeated along the second axis 46 in directions 70, 72 to find a width along the second axis 46. Referring again to Fig. 10, a graph of correlations between the padded template and the template 38 along the second axis 46 shows a peak at the center and lesser values away from the center. The prescribed cut value is indicated as line 62. Line 62 intersects with at least two points on the correlation function. For circular padding there is likely to be more than 1 peak. The closest data point to each side of the maximum peak is used to measure a width along the first axis 46. For two dimensional analysis, there is a cut point found in each direction from the center window 54c along the second axis 46. The distance between those two windows in data points is the width along the second axis. A fraction of this distance is taken as the step size for the corresponding axis (e.g., first axis, or horizontal, step size; second axis, or vertical, step size). In a preferred embodiment, one-half the width is taken as the step size. In other embodiments, the step size is taken as the entire width or some other fraction of the width. Preferably, the step size along the second axis 46 is derived in the same manner as the step size along the first axis 44. The step sizes are referred to herein as correlative auto-predictive search ('CAPS') step sizes.

### Determining Step Size for a Third Dimension

As presented above, the first axis (e.g., horizontal) and second axis (e.g., vertical) CAPS step sizes allow for x-y translation of a template 38 within a search area 40. In some applications, however, a template may not be just translated along x and y axes. The template also might be rotated relative to the search area. In another application the template may be at a different resolution than the search area or be scaled to a different size than the search area. In still another embodiment the search area may be a 3-dimensional image and the template may also be translated along a z-axis. In yet another embodiment the search area may by one in a sequence of time samples or frequency samples of an image or object, so that the third axis corresponds to time or frequency. For any of these embodiments, there may be multiple slices of a search area resulting in a three dimensional analysis. The slices may correspond to rotations, scalings, resolution samplings, an added linear dimension, or an added time or frequency dimension.

### Determining Rotational Step Size

For three dimensional template matching, where the third dimension is rotation, a rotational CAPS step size is determined. The rotational step size is derived from a rotational width. To derive the rotational width a correlation coefficient is calculated between the padded template (e.g., 52' or 52" of Figs. 8 or 9) and the original template 38 along an x=0 and y=0 axis (e.g., which is selected to be the center of the padded template). Thus, at a rotation equal to 0 we know that the correlation coefficient is one, because the original template forms the center of the padded template. The original template then is rotated in both positive angular direction 78 and a negative angular direction 80 about the center of the padded template (e.g., the rotational axis 47) as shown in Fig. 11. For each increment of rotation along a given angular direction a correlation coefficient is calculated. At some point the correlation coefficient will be the prescribed cut value (see Fig. 10). The angular rotation spanning between the rotational angle along the positive rotation direction where the window corresponding to the cut value is reached and the rotational angle along the negative rotation direction where the window corresponding to the cut-off value is reached is the rotational width. Such width is in data points. A fraction of this distance is taken as the rotational axis step size. In a preferred embodiment, one-half the rotational width is taken as the rotational axis step size. In other embodiments, the rotational step size is taken as the entire rotational width or some other fraction of the rotational width.

### Determining Scaling Step Size

For three dimensional template matching, where the third dimension is scaling, a scaling CAPS step size is determined. The scaling step size is derived from a scaling width. Correlation coefficients are calculated between the padded template (52' or 52") and the template 38 rescaled by a scaling factor for each of multiple scaling factors. Each correlation along the scaling axis (z=scaling factor) preferably is performed at the x=0, y=0 window (e.g., which is selected to be the center of the padded template). As a result, it is known that at the original scaling of 1.0, the correlation coefficient is 1.0, since the original template forms the center of the padded template. The scaling factors may be less than 1 or greater than 1. For a scaling factor less than one, the template size is decreased. For a scaling factor greater than 1 the template size is increased. In one embodiment bilinear interpolation is used to rescale the template 38.

To achieve some amount of symmetry into the correlations along the scaling axis relative to the scaling factor = 1 point, the correlations are analyzed relative to a variable a based on the following relationship:

$$s = (1 + |a|)^{sign(a)}$$

where s is the scaling factor.

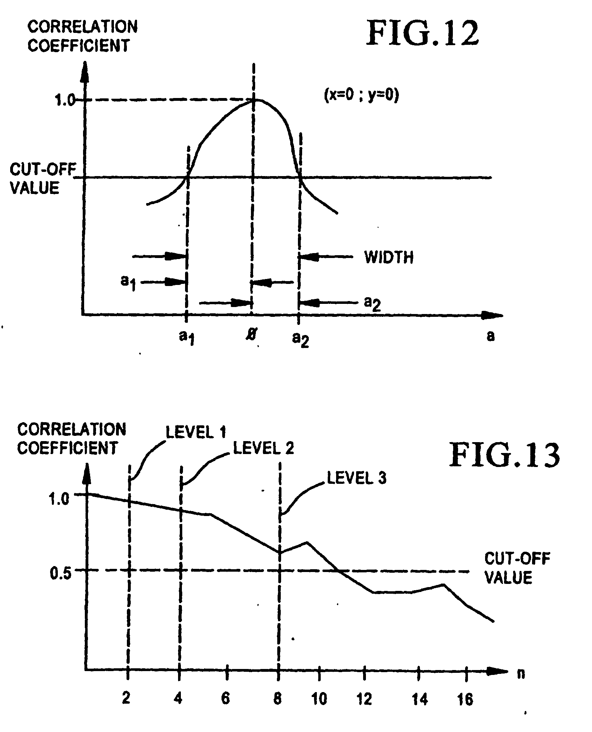

This results in the correlation coefficient being 1 at s=1 and a=0. For s less than 1, 'a' is negative. For s greater than 1, 'a' is positive. Fig. 12 shows a graph of the correlation coefficient versus 'a'. As the scaling factor, s, is varied to be less than 1, (i.e., negative 'a') the correlation coefficient decreases away from 1. Similarly, as the scaling factor, s, is varied to be greater than 1, (i.e., positive 'a') the correlation also decreases away from 1. In each direction, there will come a scaling factor and 'a' value at which the correlation coefficient is the cut value (e.g., 0.5). These points are labeled a1 and a2 in Fig. 12. The distance between a1 and a2 is the scaling width. In one embodiment the step size in units 'a' is one-half this scaling width. The step size is scaling factor units is derived using the relationship between scaling factor, s, and 'a'. It has been observed, however, that the two ranges of scaling factors (less than 1 and greater than 1) are not symmetric. To assure an accurate search, the smaller distance of a1 and a2 is used to determine the scaling step size. For example, in an embodiment in which a1 is -0.32 and a1 is 0.27, then 0.27 is used. Specifically, 0.27 is converted to the scaling factor 1.27 and used as the scaling step size. Thus, the template is to be scaled up by a factor of 1.27 or scaled down by a factor $1.27^{-1}$ (i.e., 1/1.27 = 0.79).

**Determining Subsampling Factor (Resolution) Step Size**

For three dimensional template matching, where the third dimension is a subsampling factor which determines resolution, a sample resolution CAPS step size is determined. The sample resolution step size is derived from a subsampling factor width identified in a plot of correlation coefficient versus sample resolution. Correlation coefficients are calculated between the padded template (52' or 52") and the template 38 at each of varying resolutions (e.g., subsampling factors). For each calculation both the template 38 and the padded template are sampled at a given resolution. Each correlation preferably is performed at the x=0, y=0 window (e.g., which is selected to be the center of the padded template). As a result, it is known that at the original resolution the correlation coefficient is 1.0, since the original template forms the center of the padded template.

Consider a subsampling factor n. For each subsampling factor, the template is subsampled by a factor 'n' to form a subtemplate. Also, the padded template is subsampled by the same factor, n, to form a padded subtemplate. A correlation is performed between the subsampled template and the subsampled padded template at the x=0, y=0 location for each of multiple subsampling factors (e.g., resolutions). Since the center of the padded template is the original template, one might expect that the x=0, y=0 location of the subsampled template and padded template would have a correlation of 1.0. However, in subsampling the template and padded template, there are $n^2$ different ways to perform the 2D subsampling (i.e., one sample point to represent an (n x n) original image area, while $n^2-1$ sample points are discarded). To assure accurate template matching, even in a worst case scenario, the minimum correlation coefficient resulting from the $n^2$ different ways is used. Thus, the resulting correlation coefficient at the x=0, y=0 location may be less than 1.

Referring to Fig. 13, the correlation coefficient is plotted against the subsampling factor. The correlation coefficient is the minimum correlation among the possible ways of subsampling for a given subsampling factor, as described above. In terms of a hierarchical level, the primary level 0 corresponds to a subsampling factor of n=1. A next level corresponds to n=2. The next level corresponds to n=4, then n=8, and so on in the ratio $n = 20^{(level)}$. The levels are delineated on Fig. 13. In a preferred embodiment the resolution step size is selected to be the factor n corresponding to one of the hierarchical levels. A reliable hierarchical level is determined by the cut value. For a cut value of 0.5 as shown in Fig. 13, the hierarchical matching can go to the third level, n= 8. Thus, in this example, the resolution step size is a subsampling ratio of 8. Note that to derive the resolution step size, the correlation coefficients do not need to be calculated for every value of n. They are calculated for the subsampling factors corresponding to the hierarchical levels, n = 1, 2, 4, 8, 16, ...

**Template Matching With Rotational Analysis**

For 3-dimensional template matching with rotational analysis a rotational step size is derived as described above. In addition, the horizontal and vertical step sizes are calculated as described above, using a rotational angle of 0. With the three CAPS step sizes derived, template matching then is performed. In one embodiment, template matching locations are derived between the original template 38 and the search area 40 using the three CAPS step sizes and a threshold value for the three directions (e.g., two translational and one rotational).

When performing the rotation, the template 38 may be rotated relative to a fixed search area or the search area may be rotated relative to a fixed template. It has been found that rotating the search area leads to faster overall computation and also enables parallelization of the computation process. Even though the template is smaller, rotating the template requires derivation of an alpha mask for each rotation increment. In practice the preferred choice of rotating the search area or the template depends on the relative size of the template and the search area, (e.g., the smaller the template the faster the computation of the alpha mask's at the various rotations).

Described herein is a process in which the search area is rotated, (i.e., the third axis of space 40' corresponds to rotational offset copies of the search areas 40). For a given implementation, the search area potentially may be rotated at a fixed interval (i.e., angular resolution) to achieve to a set of rotated search areas. These search area rotations are referred to herein as 'slices'. The number of slices depends upon the angular resolution. In one embodiment the angular resolution is derived from the template, as:

$$\delta\theta = (2\pi) \, / \, [2\pi * \max(tx, ty)]_{round \ up}$$

where, tx and ty are the width and height of the template, respectively 'round up' means to round up the value in [] to a next integer.

The denominator is the total number of rotated templates, slices, that are to be searched. The presence of the scaling factor $2\pi$ gives an angular resolution in radians. At the angular resolution, there are 'h' potential rotation positions and thus 'h' number of slices for the search area 40. Using the rotational step size only a subset of these potential slices are considered during an initial evaluation stage. For example, of 270 potential slices where a rotational step size is 3, a subset of 90 slices is considered in the initial evaluation stage. Thus, at one step the search area 40 is rotated by the rotational step size to derive a first subset of search area slices at differing rotational angles.

With the subset of slices identified, a two-dimensional analysis is performed in each slice of the subset. Using the first axis step size and second axis step size, correlations are performed between the template 38 and various windows of a given slice of the subset. This is done for each slice of the subset. For each correlation a correlation coefficient is computed. If the correlation coefficient meets or exceeds a select value, then the corresponding window is a candidate match. The select value preferably is less than the threshold value used for finally determining a template match. In one embodiment the select value equals one-half the threshold value, although other values may be used. The lower the select value the more candidate matches that are to be found. There may be 0 or more candidate matches per slice in the subset. The location of a candidate match is referred to as a candidate location. The slice from which the candidate match was identified is referred to herein as its home slice.

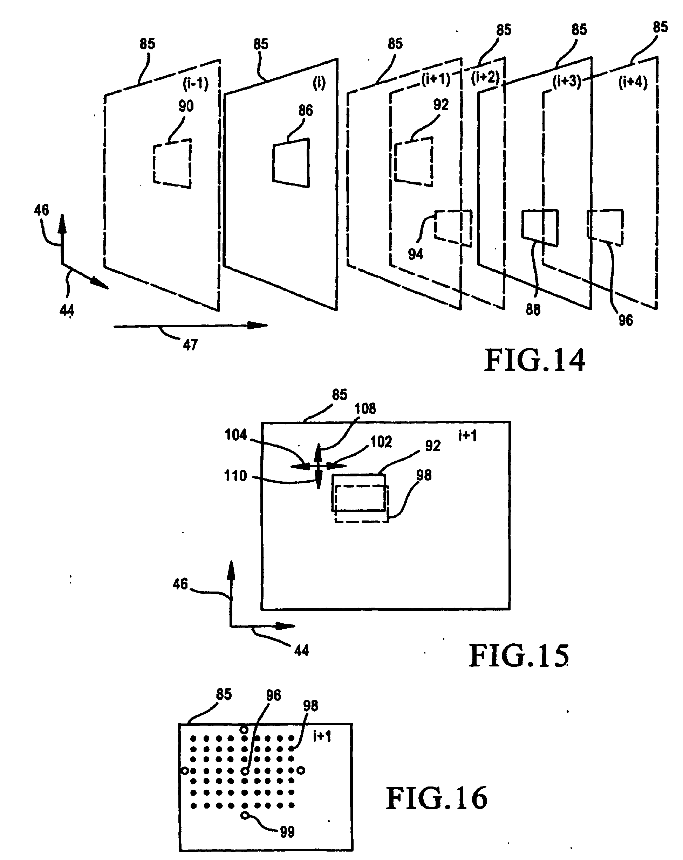

Referring to Fig. 14, several slices 85 of an entire set of potential slices are shown. With a rotational step size, for example, of three, every third slice is in the subset of slices used for the initial stage of evaluation. Slices 'i' and 'i+3' are part of such subset. Consider an example where a candidate match is found for window 86 of slice i and window 88 of slice i+3.

At the next stage, the candidate locations (e.g., windows 86 and 88) identified in the first stage are projected onto neighboring slices of the search area within the full set of slices. For any given candidate location processed in this second stage, the selected neighboring slices include rotations of the search area less than the rotational step size. Referring to Fig. 14, where the rotational step size is 3, the candidate locations 86, 88 are projected as windows onto one or more neighboring slices in each direction. The projection would not extend to the rotational step size (e.g., 3) because that would project the candidate location onto one of the slices in the subset. Such slice has already been tested for candidate matches. Shown is a projection onto the nearest neighbor. Thus candidate location 86 from slice i is projected onto slices i-1 and i+1 as widows 90, 92. Candidate location 88 from slice i+3 is projected onto slice i+2 and i+4 as windows 94, 96. In another embodiment, candidate location 86 from slice i is projected onto slices i-2, i-1, i+1, and i+2, while candidate location 88 from slice i+3 is projected onto slice i+1, i+2, i+4, and i+5.

A correlation is performed between the template 38 and the projections. If any of the resulting correlation coefficients meet or exceed the second threshold, then the projections also are candidate locations. The slice that the projection is in is referred to as its home slice. At this point in the process, there are 1 or more candidate locations - (0 candidates if the template does not have a match).

Next, a third stage of processing is performed. First, any of the candidate locations which has a correlation coefficient meeting or exceeding the threshold value is a potential match. In some embodiments, it is considered a match. In addition, two dimensional analysis is performed in the vicinity of each candidate location relative to its respective home slice to identify other potential matches. The two dimensional analysis for a given candidate location is a correlation between the original template 38 and windows of the candidate location's home slice in the vicinity of the candidate location. Such windows are selected using reduced CAPS steps sizes along the first and second axis. In one embodiment a step size of 1 is used. During this stage, the resulting correlation coefficients are compared to the threshold value. Any window of a given home slice being tested where the correlation coefficient meets or exceeds the threshold value is a potential match. In some embodiments, it is considered a match. In other embodiments, the window or windows having the highest correlation which meet or exceed the threshold value are the matches.

The third stage two-dimensional analysis is described with regard to Fig. 15 and the candidate location 92 of slice i+1. The same process is applied for each candidate location which is a projection onto an intermediary slice (between slices of the subset of slices 85). For a given candidate location, the windows which are within a 2-dimensional area bounded by the step sizes (for the respective axes) are tested by a local full search. Note that the windows which are exactly a step size away along either axis 44,46 were already tested. To do the local full search we test all the intermediary windows in the area between the local match and the windows plus or minus one step size away along either axis 44, 46. For example, given a first axis step size of x and a second axis step size of y, the windows having a center point which are +/- 0, 1, 2, ..., x-1 data points away from the locally matched window along the first axis, and +/- 0, 1, 2, ..., y-1 data points away from the locally matched window along the second axis, are tested during the full search. Although, the local match need not be recorrelated.

Referring to Fig. 16, the window corresponding to the local match has a center data point 96. The template is moved at a step interval of one data point in either direction along either axis up to but not including the data point which in one step size away. As the template is moved over this area, the windows tested during the local full search will have a center data point 98. Fig. 16 shows all the center points 98 for a given local full search as black dots for an implementation in which the first axis step size is five and the second axis step size is four. Fig. 16 shows the nearby center points from the fast search as open dots 99.

A correlation is performed between the template 38 and each window in the vicinity of the candidate match. For the vicinity shown in Fig. 16 in which the horizontal CAPS step size is 5 (used in the initial stage and second stage of the 3-dimensional template matching process) and the vertical CAPS step size is 4 (used in the initial stage and second stage of the 3-dimensional template matching process), there are 62 additional windows tested. Any of the additional 62 windows which has a correlation coefficient which equals or exceeds the threshold value is a match of the template. Alternatively, of the windows where the correlation coefficient exceeds the threshold value, only the window or windows having the highest correlation coefficient(s) are selected as matches. For example, one or more windows may have the same correlation coefficient which is highest. As another example the windows corresponding to the top 'n' correlation coefficients may be selected, where each window correlation coefficient also exceeds the threshold value.

**Template Matching with Scaling Analysis**

For 3-dimensional template matching in which the third dimension is a scaling factor, different slices of the search area are searched in which each slice has a different scaling factor. For a given implementation, the search area potentially may be scaled at a fixed interval to achieve to a set of scaled search areas. The number of slices depends upon the scaling resolution. In one embodiment the scaling resolution is derived from the template. For example if the template is a 64x64 pixel image, then the scaling resolution is 1/64. Using the scaling step size only a subset of these potential slices are considered during an initial evaluation stage. For example, of 270 potential slices where a scaling interval step size is 3 (in units of the scaling resolution), a subset of 90 slices is considered in the initial evaluation stage. The initial evaluation, along with the second stage and local full search stages of the analysis are similar to that described above for the rotational analysis.

In the initial evaluation with the subset of slices identified, a two-dimensional analysis is performed in each slice of the subset. Using the first axis step size and second axis step size, correlations are performed between the template 38 and various windows of a given slice of the subset. This is done for each slice of the subset. For each correlation a correlation coefficient is computed. If the correlation coefficient meets or exceeds a select value, then the corresponding window is a candidate match. The select value preferably is less than the threshold value used for finally determining a template match. In one embodiment the select value equals one-half the threshold value, although other values may be used. The lower the select value the more candidate matches that are to be found. There may be 0 or more candidate matches per slice in the subset. The location of a candidate match is referred to as a candidate location. The slice from which the candidate match was identified is referred to herein as its home slice.

Referring to Fig. 14, several slices 85 of an entire set of potential slices are shown. With a scaling step size, for example, of three, every third slice is in the subset of slices used for the initial stage of evaluation. Slices 'i' and 'i+3' are part of such subset. Consider an example where a candidate match is found for window 86 of slice i and window 88 of slice i+3.

At the next stage, the candidate locations (e.g., windows 86 and 88) identified in the first stage are projected onto neighboring slices of the search area within the full set of slices. For any given candidate location processed in this second stage, the selected neighboring slices include scalings variations of the search area less than the scaled step size. Referring to Fig. 14, where the scaling step size is 3, the candidate locations 86, 88 are projected as windows onto one or more neighboring slices in each direction. The projection would not extend to the scaling step size (e.g., 3) because that would project the candidate location onto one of the slices in the subset. Such slice has already been tested for candidate matches. Shown is a projection onto the nearest neighbor. Thus candidate location 86 from slice i is projected onto slices i-1 and i+1 as widows 90, 92. Candidate location 88 from slice i+3 is projected onto slice i+2 and i+4 as windows 94, 96. In another embodiment, candidate location 86 from slice i is projected onto slices i-2, i-1, i+1, and i+2, while candidate location 88 from slice i+3 is projected onto slice i+1, i+2, i+4, and i+5.

A correlation is performed between the template 38 and the projections. If any of the resulting correlation coefficients meet or exceed the select value, then the projections also are candidate locations. The slice that the projection is in is referred to as its home slice. At this point in the process, there are 1 or more candidate locations - (0 candidates if the template does not have a match).

Next, a third stage of processing is performed. First, any of the candidate locations which has a correlation coefficient meeting or exceeding the threshold value is a potential match. In some embodiments, it is considered a match. In addition, two dimensional analysis is performed in the vicinity of each candidate location relative to its respective home slice to identify other potential matches. The two dimensional analysis for a given candidate location is a correlation between the original template 38 and windows of the candidate location's home slice in the vicinity of the candidate location. Such windows are selected using reduced CAPS steps sizes along the first and second axis. In one embodiment a step size of 1 is used. During this stage, the resulting correlation coefficients are compared to the threshold value. Any window of a given home slice being tested where the correlation coefficient meets or exceeds the threshold value is a potential match. In some embodiments, it is considered a match. In other embodiments, the window or windows having the highest correlation which meet or exceed the threshold value are the matches.

The third stage two-dimensional analysis is described with regard to Fig. 15 and the candidate location 92 of slice i+1. The same process is applied for each candidate location which is a projection onto an intermediary slice (between slices of the subset of slices 85). For a given candidate location, the windows which are within a 2-dimensional area bounded by the step sizes (for the respective axes) are tested by a local full search. Note that the windows which are exactly a step size away along either axis 44, 46 were already tested. To do the local full search we test all the intermediary windows in the area between the local match and the windows plus or minus one step size away along either axis 44, 46. For example, given a first axis step size of x and a second axis step size of y, the windows having a center point which are +/- 0, 1, 2, ..., x-1 data points away from the locally matched window along the first axis, and +/- 0, 1, 2, ..., y-1 data points away from the locally matched window along the second axis, are tested during the full search. Although, the local match need not be necornelated.

Referring to Fig. 16, the window corresponding to the local match has a center data point 96. The template is moved at a step interval of one data point in either direction along either axis up to but not including the data point which in one step size away. As the template is moved over this area, the windows tested during the local full search will have a center data point 98. Fig. 16 shows all the center points 98 for a given local full search as black dots for an implementation in which the first axis step size is five and the second axis step size is four. Fig.

16 shows the nearby center points from the fast search as open dots 99.

A correlation is performed between the template 38 and each window in the vicinity of the candidate match. For the vicinity shown in Fig. 16 in which the horizontal CAPS step size is 5 (used in the initial stage and second stage of the 3-dimensional template matching process) and the vertical CAPS step size is 4 (used in the initial stage and second stage of the 3-dimensional template matching process), there are 62 additional windows tested. Any of the additional 62 windows which has a correlation coefficient which equals or exceeds the threshold value is a match of the template. Alternatively, of the windows where the correlation coefficient exceeds the threshold value, only the window or windows having the highest correlation coefficient(s) are selected as matches. For example, one or more windows may have the same correlation coefficient which is highest. As another example the windows corresponding to the top 'n' correlation coefficients may be selected, where each window correlation coefficient also exceeds the threshold value.

## Template Matching with Resolution Subsampling Analysis

For 3-dimensional template matching in which the third dimension is a subsampling resolution factor, a slice of the search area is obtained by subsampling the search area using the derived subsampling factor (see section - Determining Subsampling Factor (Resolution) Step Size). In addition, the template is subsampled using the subsampling factor. This slice and the subsampled template correspond to a reliable subsampling level.

In a first stage a full search is performed between the template and the search area slice at the reliable subsampling level. More specifically, correlations are performed between the subsampled template and all potential windows of the subsampled search area. For each correlation a correlation coefficient is computed. If the correlation coefficient meets or exceeds a select value, then the corresponding window is a candidate location The select value preferably is less than the threshold value used for finally determining a template match. In one embodiment the select value equals one-half the threshold value, although other values may be used. The lower the threshold value the more candidate locations that are to be found.

At the next stage of analysis, the candidate locations identified in the first stage are projected onto the original search area (i.e., the primary image which is not subsampled) to delineate areas of the original search area to be tested. For example, if the subsampling factor at the reliable subsampling level is 8 (i.e., n=8), then for each data point in such reliable subsampling level, there are $n^2$ data points in the original search area. Thus, in this example there are 64 windows in the original search area corresponding to each candidate location.

For each of the candidate locations, a two dimensional analysis is performed in the vicinity of each of the projected candidate locations (in the original search area) to identify potential template matches. The vicinity corresponds to the $n^2$ (e.g., 64) potential windows. At one step of the two dimensional analysis the first axis step size and the second axis step size are used to select a subset of windows among the $n^2$ windows corresponding to the projected candidate location. Any of such $n^2$ windows for which a correlation coefficient meets or exceeds the select value is a final candidate.

For each final candidate a two dimensional local full search is performed in the vicinity of each final candidate match. The vicinity at this step corresponds to all the intermediary windows in the area between the final candidate and the windows plus or minus one step size away along either axis. For example, given a first axis step size of x and a second axis step size of y, the windows having a center point which are +/- 0, 1, 2, ..., x-1 data points away from the locally matched window along the first axis, and +/- 0, 1, 2, ..., y-1 data points away from the locally matched window along the second axis, are tested during the full search. Note that x and y should each be less than n. The window having the highest correlation coefficient above the threshold value, if any, is a match. In various embodiment there may be zero or more matches found for each candidate match. In some embodiments only the window or windows having the highest correlation coefficient (relative to the original template) are selected as the template match. In other embodiments all windows having a correlation coefficient exceeding the threshold value are template matches.

## 2D-CAPS Searching

Once the desired 2D-CAPS step sizes are derived, then the template 38 is compared to the various windows 42 of the search area 40 at the step size increments during a fast search process. In one embodiment the comparison is a correlation function of the template 38 and the window 42 and results in a correlation coefficient. Any window 42 in which the correlation coefficient with the template 38 is found to exceed a specific value is a local match for the template. In a preferred embodiment the specific value is the cut value times a threshold value.

Next, a full search then is performed in the vicinity of any location which is a local match. A full search of such vicinity encompasses performing a correlation between the template and every potential search area window between the local match location window and the windows at the prior and next step in each of the horizontal and vertical axes. For example, if the horizontal step size is 3 pixels and the vertical step size is 4 pixels, then correlations are performed for windows $\pm$ 1 pixel and $\pm$ 2 pixels along the horizontal axis and $\pm$ 1 pixel, $\pm$ 2 pixels and $\pm$ 3 pixels along the vertical axis. In addition correlations are performed for windows off the axes within the area delineated by the step sizes. Thus, the full search of the vicinity of the local match for this example includes (2 2+1) * (2*3+1) - 1 = 34 correlations between the template and the search area. Any locations among the local match locations and the locations tested during the full search of the vicinity which exceed the threshold value are considered template matches. In some embodiments, the only the location having the highest correlation is considered a match. In other embodiments there may be multiple matches. Thus, the top matches or all matches above the threshold are selected as resultant matches.

Fast Search:

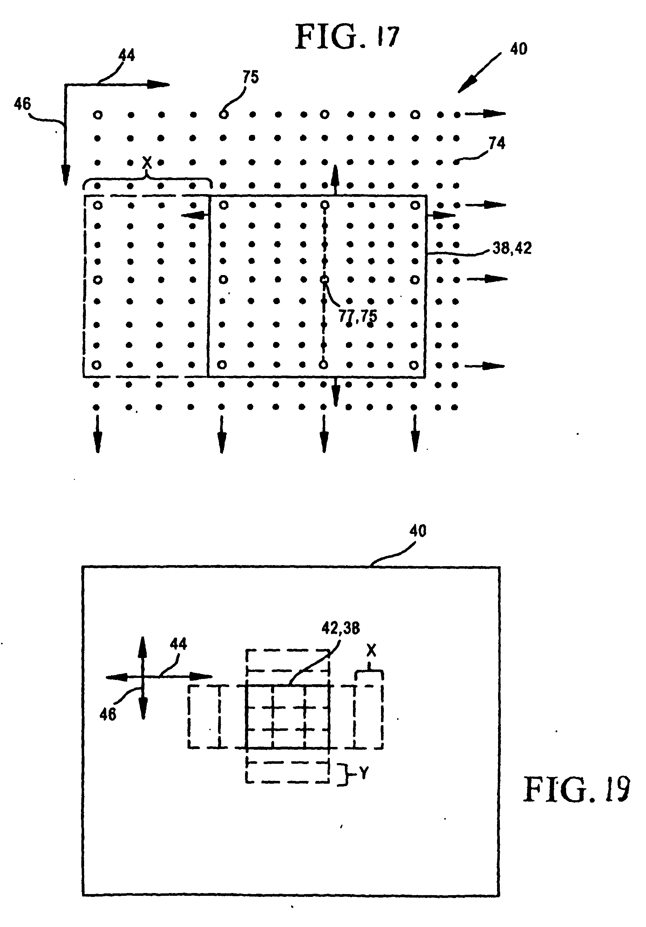

In a fast search not every potential window of the search area is compared to the template. Referring to Fig. 17, the search area 40 is shown as an array of data points 74, 75 such as image pixels points. The two CAPS step sizes are used for selecting windows from the search area 40 to be compared to the template. The data points in the search area 40 about which the template is centered during successive steps are designated with an open circle and part number 75. Other data points in the points which are not center points are designated as a data point 74.

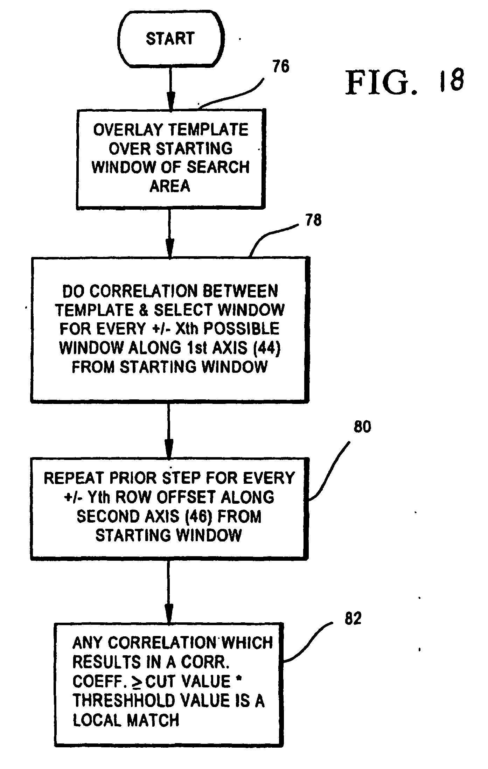

Referring to Fig. 17,18 and 19, at a step 76 the template 38 (see Fig. 1) is overlayed to a starting window 42 of the search area 40. The starting window can be any window of the search area. At step 78 a correlation is performed between the template 38 and the starting window 42 and every +/- x-th window along the first axis 44, where x is the first axis step size. Thus, for a horizontal axis step size of 'x', the template is shifted along the horizontal axis 44 by x data points at a time. More specifically, a center point 77 of the template 38 coincides with a given pixel 75 for a given iteration. The template then is moved to center over another data point 74 that is x points away from the given pixel 75 along the horizontal axis 44. The template 38 is moved in each direction along the axis 44 using the first step size of x. A correlation is performed at each step.

At step 80 the shifting along the first axis 44 and testing of windows is performed for a template center point repositioned over every y-th row of data points. Specifically, once the initial row of the search area has been tested, the template 38 is moved along the second axis 46 to another row that is y data points away, where y is the second axis step size. This next row then is tested by shifting along the first axis 44 using the first axis step size. A correlation is performed at each iteration. Then another row is tested which is y data points away along the second axis 46. In this manner the template is shifted by the second step size along the second axis 46 and by the first step size along the first axis 44 to select windows to be tested during the fast search. For example, in a search area which is 400 pixels by 400 pixels, and where the first axis step size is four and the second axis step size is four, there are 100 * 100 = 10,000 windows tested during the fast search.

Of the tested windows, at step 82 the window location for any correlation which resulted in a correlation coefficient which is greater than or equal to the product of the cut value times a predetermined threshold value is considered a local match. In a preferred embodiment the cut value is the same for each axis. Where the cut value used along one axis differs from the cut value used along the other axis, either cut value may be used. Alternatively, an average of the cut values may be used. The threshold value is a predetermined value and signifies the minimum correlation coefficient acceptable to designate a window as being a match for the template. Typical values are 0.8 and 0.9. The specific value may vary based upon the search area or type of date. The specific value may be determined empirically for different types of data or search area characteristics.

Local Full Search:

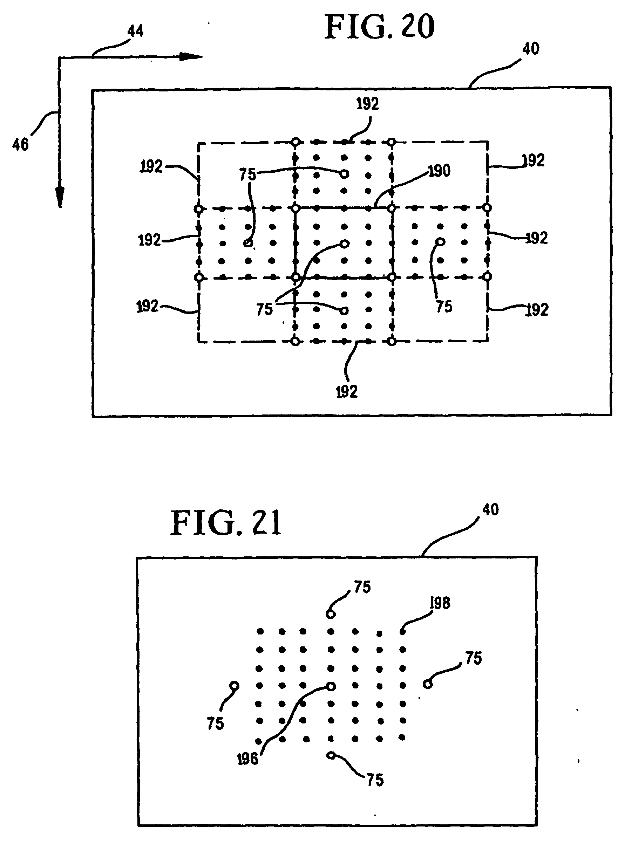

Once the fast search is complete (or during the course of the fast search), a local full search is performed about each of the local matches. Referring to Fig. 20, for a given window 190 of the search area 40 which is a local match, the windows 192 which are within a 2-dimensional area bounded by the step sizes (for the respective axes) are tested by a local full search. Note that the windows which are exactly a step size away along either axis 44, 46 were already tested during the fast search. To do the local full search we test all the intermediary windows in the area between the local match and the windows plus or minus one step size away along either axis 44,46. For example, given a first axis step size of x and a second axis step size of y, the windows having a center point which are +/- 0, 1, 2, ..., x-1 data points away from the locally matched window along the first axis, and +/- 0, 1, 2, ..., y-1 data points away from the locally matched window along the second axis, are tested during the full search. Although, the local match need not be recorrelated.

Referring to Fig. 21, the window corresponding to the local match has a center data point 196. The template is moved at a step interval of one data point in either direction along either axis up to but not including the data point which in one step size away. As the template is moved over this area, the windows tested during the local full search will have a center data point 198. Fig. 21 shows all the center points 198 for a given local full search as black dots for an implementation in which the first axis step size is four and the second axis step size is four. Fig. 21 shows the nearby center points from the fast search as open dots 75.

A correlation is performed between the template 38 and each window in the vicinity of the local match. For the vicinity shown in Fig. 21 in which the step is four, there are 48 additional windows tested. Any of the additional 48 windows or the local match which has a correlation coefficient which equals or exceeds the threshold value is a match of the template. Alternatively, of the windows where the correlation coefficient exceeds the threshold value, only the window or windows having the highest correlation coefficient(s) are selected as matched. For example, one or more windows may have the same correlation coefficient which is highest. As another example the windows corresponding to the top 'n' correlation coefficients may be selected, where each window correlation coefficient also exceeds the threshold value.

### Implementing the Correlation Function

The correlation coefficient for a correlation between two data sets 'a' and 'b' is defined below. The data set 'a' is the template 38 or an estimate or coarse representation of the template. In a preferred embodiment it is the template 38. The data set 'b' is a window of the padded template (or of a rotational offset of the padded template) for the process of finding the CAPS step sizes. The data set 'b' is a window of the search area 40 (or of a rotational offset of the search area) for the process of identifying candidate locations, potential template matches or template matches. Each of data sets 'a' and 'b' may be a matrix, image or another set of data points. The correlation coefficient, corr is:

$$\text{corr} = \frac{E\{[a - E(a)] * [b - E(b)]\}}{sd(a) * sd(b)}$$

which may be simplified to

$$\text{corr} = \frac{E(a*b) - E(a)*E(b)}{sd(a) * sd(b)}$$

where E(x) = expected value of data set (x)
sd(x) = standard deviation of data set (x)
and corr is between -1.0 and +1.0.

### Meritorious and Advantageous Effects

One advantage of the invention is that template matches are found more quickly and with greater reliability than prior correlation search methods. In particular, this search methodology is more tolerant of noise and offsets of the template as demonstrated empirically by forming a search area from copies of templates altered by lowpass filtering or Gaussian noise.

Although a preferred embodiment of the invention has been illustrated and described, various alternatives, modifications and equivalents may be used. For example, although the fast search is described as performing respective correlations between the template 38 and a subset of window areas, an estimate of the template 38 may be used instead followed by additional correlation using the full template for correlations resulting in a coefficient exceeding a prescribed value.

Further, although the full local search is described to include performing a correlation for each potential window in the vicinity of the local match (e.g., step size equal 1), an intermediate level search may be performed instead using a step size less than the first step size and second step size, but greater than 1. The step size for the intermediate level search may be determined in the same manner as the for the fast search - based on template characteristics. For example, two cut values are used during the process of identifying step sizes. One cut value for a given axis is used to determine the step size for the fast search. The other cut value for the same axis is used to determine the step size for the intermediate level search. The step size for the fast search is to be larger than the step size for the intermediary level search.

In operation, the intermediate level search is performed in the vicinity of all local matches resulting from the fast search, where the vicinity is bounded by the first step size and second step size of the fast search. Any of the windows tested in the intermediate level search which has a correlation to the first template exceeding a prescribed value is an intermediate level search local match. The prescribed value is selected either independent of or in relation to the cut values and threshold value previously described. Next, a full search is performed in the vicinity of the intermediate level search local matches, where the vicinity is bounded by the step sizes used in the intermediate level search. Any one or more of the local matches and full search correlations which have a correlation to the first template exceeding the threshold value are template matches.

As used herein the term vicinity of a window refers to an area bounded by lines one step size away or less and parallel to the search area axes.

Although third dimensional analyses are described above for rotation, scaling and resolution, additional third dimensional analyses which may be implemented according to this invention, include another spatial dimension (e.g., z axis to achieve 3 orthogonal axes), time (e.g., motion within sequential frames), or frequency bands (e.g., satellite pictures taken with different frequency bands, such as from millimeter to infrared or ultraviolet frequency bands). In addition, template matching for additional dimensions beyond 3 also may be performed.

Therefore, the foregoing description should not be taken as limiting the scope of the invention which is defined by the appended claims.

## Claims

1. A method for locating a match between a first template (38) of data and a search area (40) of data, the first template including a first plurality of data points, the search area including a second plurality of data points exceeding in number the first plurality of data points, the method comprising the steps of:

   padding the first template (38) with additional data to enlarge the template into a padded template (52'/52") wherein a first window area (54c) within the padded template is formed by the first template and includes the first plurality of data points;
   correlating the first template to window areas within the padded template along a first axis (44) about the first window area to derive a first step size;
   correlating the first template to window areas within the padded template along a second axis (46) about the first window area to derive a second step size; and
   selecting a subset of window areas within the search area (40) to evaluate for locating a match to the first template.

2. The method of claim 1, in which the step of selecting comprises, selecting a subset of window areas within the search area to correlate to the first template, wherein the subset of window areas is selected by using either one or both of the first step size and second step size; and
   correlating each one of the window areas among the selected subset of window areas to the first template.

3. The method of claim 1 or 2, further comprising the step of:

   identifying as a potential template match each of the correlated window areas for which the correlation to the first template results in a correlation coefficient exceeding a predetermined value.

4. The method of claim 3, wherein the subset of window areas is a first subset of window areas, and further comprising the steps of:

   selecting a second subset of window areas in the search area (40) in the vicinity of a given potential template match;
   correlating each one of the window areas among the selected second subset of window areas to the first template.

5. The method of claim 4, further comprising the step of:

   identifying as a template match one or more of the correlated window areas among the second subset and the window area corresponding to the local template match for which the correlation to the first template results in a correlation coefficient which exceeds a threshold value.

6. The method of claim 5, in which only the correlated window area among the second subset and the window area corresponding to the local template match for which the correlation to the first template results in a highest correlation coefficient which exceeds the threshold value.

7. The method of claim 4, 5, or 6 wherein the vicinity of the given potential template match corresponds to all potential windows of the search area that are less than the first step size away moving parallel to the first axis and are less than the second step size away moving parallel to the second axis.

8. The method of claim 1, 2, 3, 4, 5, 6, or 7 wherein the step of correlating the first template to window areas within the padded template along the first axis about the first window area comprises the steps of:

   correlating the first template to window areas within the padded template along the first axis about the first window area to achieve a correlation coefficient for each said window area;
   determining a first distance along the first axis between the first window area and a window area along the first axis in a first direction for which a correlation coefficient conforms to a cut value criteria;
   determining a second distance along the first axis between the first window area and a window area along the first axis in a second direction opposite the first direction for which a correlation coefficient conforms to the cut value criteria; and
   deriving a first step size from the first distance and the second distance.

9. The method of claim 1, 2, 3, 4, 5, 6, 7 or 8 in which the step of padding comprises the step of: repeating the first template to form the padded template from multiple copies of the first template.

10. The method of claim 1, 2, 3, 4, 5, 6, 7 or 8 in which the step of padding comprises the step of:

    deriving a padding value from the first plurality of data points;
    using the padding value as a value for each data point added to the first template to form the padded template.

11. The method of claim 10, in which the step of deriving a padding value comprises the step of determining an average of the first plurality of data points, wherein the padded value is the determined average.

12. The method of claim 1, 2, 3, 4, 5, 6, 7, 8, 9, 10 or 11, further comprising the step of correlating the first template to window areas within the padded template along a third axis about the first window area to derive the third step size, and in which the step of selecting comprises using first step size, second step size and third step size to select windows of the search area to evaluate for a template match.

13. The method of claim 12, in which the first axis and second axis are linear axes and the third axis is a rotational axis.

14. The method of claim 12, in which the first axis and second axis are linear axes and the third axis corresponds to time.

15. The method of claim 12, in which the first axis and second axis are linear axes and the third axis corresponds to frequency.

16. The method of claim 12, in which the first axis, second axis and third axis are orthogonal spatial axes.

17. The method of claim 1, further comprising the steps:

    subsampling the first template and the padded template for a plurality of subsampling factors;
    for each subsampling factor, correlating the subsampled first template to a window area within the subsampled padded to achieve a correlation coefficient corresponding to the subsampling factor;
    deriving a third step size based upon the each of the respective correlation coefficients corresponding to the subsampling factors.

18. The method of claim 1, further comprising the steps of:

    scaling one of the first template and the padded template relative to the other of the first template and the padded template for each one of a plurality of scaling factors;
    for each scaling factor, correlating the scaled one of the first template and the padded template to the other one of the first template and the padded template at a first window to achieve a correlation coefficient corresponding to the scaling factor;
    deriving a third step size based upon the each of the respective correlation coefficients corresponding to the scaling factors.

19. The method of claim 1, further comprising the step of deriving a third step size from the first template (38) and the padded template (52'/52"); wherein the search area (40) is a two dimensional search area, and in which the step of selecting the subset of window areas comprises:

deriving search area slices from the two dimensional search area to achieve a three dimensional search area, wherein the two dimensional search area is one slice of the three dimensional search area.

20. The method of claim 19, in which the step of using the first step size, second step size and third step size further comprises:

selecting a subset of slices from all the slices forming the three dimensional search area using the third step size;

for each one slice within the subset of slices, selecting a subset of window areas within said each one slice to evaluate for locating a match to the first template, wherein the first step size and second step size are used for selecting the subset of window areas; and

correlating each one window of the selected subset of windows to the first template.

21. The method of claim 20, further comprising the step of:

identifying as a potential template match each of the correlated window areas for which the correlation to the first template results in a correlation coefficient exceeding a predetermined value.

22. The method of claim 21, in which for any given one of the potential template matches, there is a home slice within which such given one of the potential template matches is located, and further comprising the steps of:

for each one potential template match, projecting said one potential match onto neighboring slices within the three dimensional search area which are less than the third step size away from the home slice of said one potential template match to achieve a test subset of windows among the neighboring slices,

for each one potential template match, correlating the first template to each window among the test subset of windows for said one potential template match.

identifying as another potential template match each of the correlated windows among the test subset of windows for which the correlation to the first template results in a correlation coefficient exceeding the predetermined value, wherein the slice of said neighboring slices which includes said another potential template match is the home slice for said another potential template match.

23. The method of claim 22, wherein the subset of windows is a first subset of windows, wherein each one potential template match and each one of said another template matches is a candidate match, and further comprising the step of:

for each one candidate match, selecting a second subset of windows in the vicinity of the candidate match;

correlating each one of the window areas among the selected second subset of window areas to the first template.

24. The method of claim 23, further comprising the step of:

identifying as a template match one or more of the correlated window areas among the second subset for which the correlation to the first template results in a correlation coefficient which exceeds a threshold value.

25. The method of claim 24, in which the template match is selected to be the window among the second subset of windows for which the correlation to the first template results in a highest correlation coefficient which exceeds the threshold value.

26. The method of claim 23, wherein the vicinity of said one candidate match-corresponds to all potential windows on the home slice of said one candidate match that are less than the first step size away from said one candidate match moving parallel to the first axis and are less than the second step size away from said one candidate match moving parallel to the second axis.

27. The method of claim 1, in which the search area is a two dimensional search area, and further comprising the steps of:

deriving a third step size from the first template and the padded template;

deriving a subsampled search area by using the third step size as a subsampling factor for subsampling the two dimensional search area;

deriving a subsampled template by using the third step size as a subsampling factor to subsample the first template;

wherein a window of the subsampled search area includes data points of the subsampled search area which are within an area determined by an overlay of the subsampled template onto the subsampled search area, and wherein a set of all potential windows of the subsampled search area includes all potential areas which may be overlayed by the subsampled template;

for each one window among the set of all potential windows of the subsampled search area, correlating the first template to said one window to derive a correlation coefficient; and

identifying as a candidate location each one window of the set of all potential windows for which the correlation coefficient exceeds a predetermined value.

28. The method of claim 27, in which the subsampled search area comprises a plurality of data points, each one data point of the plurality of data points corresponding to $n^2$ data points of the two dimensional search area, wherein n equals the third step size, and further comprising the steps of:

for each one candidate location in the subsampled search area, selecting a first subset of windows in the two dimensional search area corresponding to said one candidate location in the subsampled search area to achieve at least one first subset of windows;

for each of said at least one first subset of windows, selecting a second subset of windows using the first step size and the second step size; and

identifying as a candidate match each window among the second subset of windows which correlates to the first template with a correlation coefficient which exceeds the predetermined value.

29. The method of claim 28, further comprising the steps of:

for each one candidate match, selecting a third subset of windows in the vicinity of the candidate match;

correlating each one of the window areas among the selected third subset of window areas to the first template (38).

30. The method of claim 29, further comprising the step of:

identifying as a template match one or more of the correlated window areas among the third subset for which the correlation to the first template results in a correlation coefficient which exceeds a threshold value.

31. An apparatus (10) for estimating a location of a first template (38) of data within a search area (40) of data, the first template including a first plurality of data points, the search area including a second plurality of data points exceeding in number the first plurality of data points, the apparatus comprising:

first means for processing which pads the first template with additional data to enlarge the template into a padded template (52'/52") wherein a first window area (54c) within the padded template is formed by the first template and includes the first plurality of data points; and

second means for processing which correlates the first template to window areas within the padded template along a first axis (44) about the first window area to derive a first step size, and which correlates the first template to window areas within the padded template along a second axis (46) about the first window area to derive a second step size;

wherein the first step size and second step size are used to select window areas (42) to evaluate for estimating the location of the first template within the search area (40).

32. The apparatus of claim 31, in which the second processing means respectively correlates the first template (38) to one window area of a subset of potential window areas within the search area (40) for each one window area within the subset of potential window areas, wherein the subset of potential window areas is selected from all potential window areas within the search area using either one or both of the first step size and the second step size, and wherein each respective correlation performed by the second-processing means to respectively correlate the first template to each said one window area of the subset results in a correlation coefficient;

wherein the first processing means further, compares the resulting correlation coefficient to a predetermined value for each of the respective correlations between the first template and said one window area within the subset of potential window areas.

33. The apparatus of claim 32, in which the first processing means identifies each said one window area within the subset as a potential template match where the resulting correlation coefficient is at least as great as the predetermined value.

34. The apparatus of claim 33, wherein the subset of window areas is a first subset of window areas, and in which the first processing means selects a second subset of window areas in the search area in the vicinity of a given potential template match among said identified potential template matches; the second processing means further, correlates each one of the window areas among the selected second subset of window areas to the first template.

35. The apparatus of claim 34, in which the second processing_means identifies as a template match one or more of the correlated window areas among the second subset and the window area corresponding to the local template match for which the correlation to the first template results in a correlation coefficient which exceeds a threshold value..

36. The apparatus of claim 35, in which only the correlated window area among the second subset and the window area corresponding to the local template match for which the correlation to the first template results in a highest correlation coefficient which exceeds the threshold value.

37. The apparatus of claim 31, wherein the second processing_means correlates the first template to window areas within the padded template to derive a third step size, and wherein the first step size, the second step size and the third step size are used to select window areas to evaluate for estimating the location of the first template within the search area.

38. The apparatus of claim 37, in which the first axis and second axis are linear axes and the third axis is a rotational axis.

39. The apparatus of claim 37, in which the first axis, second axis and third axis are orthogonal spatial axes.

40. The apparatus of claim 37, in which the first axis and second axis are linear axes and the third axis corresponds to time.

41. The apparatus of claim 37, in which the first axis and second axis are linear axes and the third axis corresponds to frequency.

**Patentansprüche**

1. Verfahren zum Lokalisieren einer Übereinstimmung zwischen einem ersten Daten-Template (38) und einem Suchgebiet (40), wobei das erste Template eine erste Vielzahl von Datenpunkten aufweist, das Suchgebiet eine zweite Vielzahl von Datenpunkten aufweist, deren Anzahl diejenige der ersten Vielzahl von Datenpunkten übersteigt, wobei das Verfahren die folgenden Schritt umfaßt:

   - Füllen des ersten Templates (38) mit zusätzlichen Daten, um das Template zu einem gefüllten Template (52'/52") zu erweitern, wobei durch das erste Template ein erster Fensterbereich (54c) in dem gefüllten Template gebildet wird und dieser die erste Vielzahl von Datenpunkten umfaßt;
   - Korrelieren des ersten Templates mit Fensterbereichen innerhalb des gefüllten Templates entlang einer ersten Achse (44) um den ersten Fensterbereich, um eine erste Schrittgröße abzuleiten; und
   - Korrelieren des ersten Templates mit Fensterbereichen innerhalb des gefüllten Templates entlang einer zweiten Achse (46) um den ersten Fensterbereich, um eine zweite Schrittgröße abzuleiten; und
   - Wählen einer Untergruppe von Fensterbereichen innerhalb des Suchgebiets (40) für das Auswerten zum Lokalisieren einer Übereinstimmung mit dem ersten Template.

2. Verfahren nach Anspruch 1, bei dem der Schritt des Wählens das Wählen einer mit dem ersten Template zu korrelierenden Untergruppe Innerhalb des Suchgebiets umfaßt, wobei die Untergruppe von Fensterbereichen unter Verwendung der ersten Schrittgröße und/oder der zweiten Schrittgröße gewählt wird, und das Korrelieren jedes der Fensterbereiche der gewählten Untergruppe von Fensterbereichen mit dem ersten Template umfaßt.

3. Verfahren nach Anspruch 1 oder 2, ferner mit dem Schritt des Identifizierens jedes der korrelierten Fensterbereiche, für welche die Korrelation mit dem ersten Template zu einem einen vorbestimmten Wert übersteigenden Korrelationskoeffizenten führt, als eine potentielle Template-Übereinstimmung.

4. Verfahren nach Anspruch 3, bei dem die Untergruppe von Fensterbereichen eine erste Untergruppe von Fensterbereichen ist, und ferner mit den folgenden Schritten:

   - Wählen einer zweiten Untergruppe von Fensterbereichen im Suchgebiet (40) in der Nähe einer bestimmten potentiellen Template-Übereinstimmung;
   - Korrelieren jedes der Fensterbereiche in der gewählten zweiten Untergruppe von Fensterbereichen mit dem ersten Template.

5. Verfahren nach Anspruch 4, ferner mit dem Schritt des Identifizierens eines oder mehrerer der korrelierten Fensterbereiche der zweiten Untergruppe und des der lokalen Template-Übereinstimmung entsprechenden Fensterbereichs, für welchen die Korrelation mit dem ersten Template zu einem einen Schwellenwert übersteigenden Korrelationskoeffizienten führt, als Template-Übereinstimmung.

6. Verfahren nach Anspruch 5, bei dem nur der korrelierte Fensterbereich der zweiten Untergruppe und der der lokalen Template-Übereinstimmung entsprechende Fensterbereich, für den die Korrelation mit dem ersten Template zu dem höchsten Korrelationskoeffizienten führt, den Schwellenwert übersteigt.

7. Verfahren nach Anspruch 4, 5 oder 6, bei dem die Umgebung der potentiellen Template-Übereinstimmung sämtlichen potentiellen Fenstern des Suchgebiets entspricht, die parallel zur ersten Achse weniger als die erste Schrittgröße entfernt und parallel zur zweiten Achse weniger als die zweite Schrittgröße entfernt sind.

8. Verfahren nach Anspruch 1, 2, 3, 4, 5, 6 oder 7, bei dem der Schritt des Korrelierens des ersten Templates mit Fensterbereichen innerhalb des gefüllten Templates entlang der ersten Achse um den ersten Fensterbereich die folgenden Schritte umfaßt:

   - Korrelieren des ersten Templates mit Fensterbereichen innerhalb des gefüllten Templates entlang der ersten Achse um den ersten Fensterbereich um einen Korrelationskoeffizienten für jeden der Fensterbereiche zu erreichen;
   - Bestimmen einer ersten Entfernung entlang der ersten Achse zwischen dem ersten Fensterbereich und einem Fensterbereich, für den ein Korrelationskoeffizient einem Anhaltewertkriterium entspricht, entlang der ersten Achse in einer ersten Richtung;
   - Bestimmen einer zweiten Entfernung entlang der ersten Achse zwischen dem ersten Fensterbereich und einem Fensterbereich, für den ein Korrelationskoeffizient dem Anhaltewertkriterium entspricht, entlang der ersten Achse in einer zu der ersten Richtung entgegengesetzten zweiten Richtung; und
   - Ableiten einer ersten Schrittgröße aus der ersten Entfernung und der zweiten Entfernung.

9. Verfahren nach Anspruch 1, 2, 3, 4, 5, 6, 7 oder 8, bei dem der Schritt des Füllens den Schritt des Wiederholens des ersten Templates umfaßt, um das gefüllte Template aus mehreren Kopien des ersten Templates zu bilden.

10. Verfahren nach Anspruch 1, 2, 3, 4, 5, 6, 7 oder 8, bei dem der Schritt des Füllens den Schritt des Ableitens eines Füllwertes aus der ersten Vielzahl von Datenpunkten, und des Verwendens des Füllwerts als einen Wert für jeden Datenpunkt, der dem ersten Template zur Bildung des gefüllten Templates hinzugefügt wird.

11. Verfahren nach Anspruch 10, bei dem der Schritt des Ableitens eines Füllwerts den Schritt des Bestimmens eines Durchschnittwerts der ersten Vielzahl von Datenpunkten umfaßt, wobei der Füllwert der bestimmte Durchschnittswert ist.

12. Verfahren nach Anspruch 1, 2, 3, 4, 5, 6, 7, 8, 9, 10 oder 11, ferner mit dem Schritt des Korrelierens des ersten Templates mit Fensterbereichen innerhalb des gefüllten Templates entlang einer dritten Achse um den ersten Fensterbereich, um die dritte Schrittgröße abzuleiten, und wobei der Schritt des Wählens das Verwenden der ersten Schrittgröße, der zweiten Schrittgröße und der dritten Schrittgröße zum Auswählen von Fenstern des Suchgebiets für die Auswertung nach einer Template-Übereinstimmung umfaßt.

13. Verfahren nach Anspruch 12, bei dem die erste Achse und die zweite Achse lineare Achsen sind und die dritte Achse eine Drehachse ist.

14. Verfahren nach Anspruch 12, bei dem die erste Achse und die zweite Achse lineare Achsen sind und die dritte Achse der Zeit entspricht.

15. Verfahren nach Anspruch 12, bei dem die erste Achse und die zweite Achse lineare Achsen sind und die dritte Achse der Frequenz entspricht.

16. Verfahren nach Anspruch 12, bei dem die erste Achse, die zweite Achse und die dritte Achse orthogonale Raumachsen sind.

17. Verfahren nach Anspruch 1, ferner mit den folgenden Schritten:

   - Teilabtasten des ersten Templates und des gefüllten Templates nach einer Vielzahl von Tellabtastungsfaktoren;
   - für jeden Tellabtastungsfaktor, Korrelieren des teilabgetasteten ersten Templates mit einem Fensterbereich Innerhalb des teilabgetasteten gefüllten Substrats, um einen Korrelationskoeffizienten zu erreichen, der dem Teilabtastungsfaktor entspricht;
   - Ableiten einer dritten Schrittgröße basierend auf jedem der jeweiligen Korrelationskoeffizienten, welche den Teilabtastungsfaktoren entsprechen.

18. Verfahren nach Anspruch 1, ferner mit den folgenden Schritten:

   - Skalleren eines Templates, nämlich des ersten Templates oder des gefüllten Templates, in bezug auf das andere Template, nämlich das erste Template oder das gefüllte Template, nach jedem einer Vielzahl von Skalierungsfaktoren;
   - für jeden Skalierungsfaktor, Korrelieren des skalierten Templates, nämlich des ersten Templates oder des gefüllten Templates, mit dem anderen Template, nämlich dem ersten Template oder dem gefüllten Template, an einem ersten Fenster, um einen Korrelationskoeffizienten zu erreichen, der dem Skalierungsfaktor entspricht; und
- Ableiten einer dritten Schrittgröße basierend auf jedem der jeweiligen Korrelationskoeffizienten, welche den Skalierungsfaktoren entsprechen.

19. Verfahren nach Anspruch 1, ferner mit dem Schritt des Ableitens einer dritten Schrittgröße aus dem ersten Template (38) und dem gefüllten Template (52'/52"), wobei das Suchgebiet (40) ein zweidimensionales Suchgebiet ist, und wobei der Schritt des Wählens der Untergruppe von Fensterbereichen umfaßt:

- das Ableiten von Suchgebietausschnitten aus dem zweidimensionalen Suchgebiet, um ein dreidimensionales Suchgebiet zu bilden, wobei das zweidimensionale Suchgebiet ein Ausschnitt des dreidimensionalen Suchgebiets ist.

20. Verfahren nach Anspruch 19, bei dem der Schritt des Verwendens der ersten Schrittgröße, der zweiten Schrittgröße und der dritten Schrittgröße ferner umfaßt:

- Wählen einer Untergruppe von Ausschnitten aus sämtlichen Ausschnitten, weiche das dreidimensionale Suchgebiet bilden, unter Verwendung der dritten Schrittgröße;
- für jeden Ausschnitt in der Untergruppe von Ausschnitten, Wählen einer Untergruppe von Fensterbereichen innerhalb jedes einen Ausschnitts, um diese zum Lokalisieren einer Übereinstimmung mit dem ersten Template auszuwerten, wobei die erste Schrittgröße und die zweite Schrittgröße zum Wählen der Untergruppe der Fensterbereiche verwendet werden; und
- Korrelieren jedes Fensters der gewählten Untergruppe von Fenstern mit dem ersten Template.

21. Verfahren nach Anspruch 20, ferner mit dem Schritt des Identifizierens jedes der korrelierten Fensterbereiche, für welchen das Korrelieren mit dem ersten Template zu einem einen vorbestimmten Wert übersteigenden Korrelationskoeffizienten führt, als potentielle Template-Übereinstimmung.

22. Verfahren nach Anspruch 21, bei dem für jede gegebene potentielle Template-Übereinstimmung ein Ausgangsausschnitt existiert, in dem eine derartige gegebene potentielle Template-Obereinstimmung angeordnet ist, und ferner mit den folgenden Schritten:

- für jede potentielle Template-Übereinstimmung, Projizieren der einen potentiellen Übereinstimmung auf benachbarte Ausschnitte innerhalb des dreidimensionalen Suchgebiets, die weniger als die dritte Schrittgröße von dem Ausgangsausschnitt der einen potentiellen Template-Übereinstimmung entfernt sind, um eine Test-Untergruppe von Fenstern unter den benachbarten Ausschnitten zu bilden;
- für jede potentielle Template-Übereinstimmung, Korrelieren des ersten Templates mit jedem Fenster in der Test-Untergruppe von Fenstern für die genannte eine potentielle Template-Übereinstimmung;
- Identifizieren jedes der korrelierten Fenster in der Test-Untergruppe von Fenstern, für welche die Korrelation mit dem ersten Template zu einem den vorbestimmten Wert übersteigenden Korrelationskoeffizienten führt, als eine weitere potentielle Template-Übereinstimmung, wobei der Ausschnitt der benachbarten Ausschnitte, welcher die andere potentielle Template-Übereinstimmung enthält, der Ausgangsausschnitt für die andere potentielle Template-Übereinstimmung ist.

23. Verfahren nach Anspruch 22, bei dem die Untergruppe von Fenstern eine ertse Untergruppe von Fenstern ist, wobei jede potentielle Template-Übereinstimmung und jede andere Template-Übereinstimmung eine mögliche Übereinstimmung ist, und ferner mit den folgenden Schritten:

- für jede mögliche Übereinstimmung, Wählen einer zweiten Untergruppe von Fenstern in der Nähe der möglichen Übereinstimmung;
- Korrelieren jedes Fensterbereichs der gewählten zweiten Untergruppe von Fensterbereichen mit dem ersten Template.

24. Verfahren nach Anspruch 23, ferner mit dem Schritt des Identifizierens eines oder mehrerer der korrelierten Fensterbereiche in der zweiten Untergruppe, für welche das Korrelieren mit dem ersten Template zu einem einen Schwellenwert übersteigenden Korrelationskoeffizienten führt, als Template-Übereinstimmung.

25. Verfahren nach Anspruch 24, bei dem die Template-Übereinstimmung als das Fenster in der zweiten Untergruppe von Fenstern gewählt ist, für welche das Korrelieren mit dem ersten Template zu dem einen Schwellenwert übersteigenden höchsten Korrelationskoeffizienten führt.

26. Verfahren nach Anspruch 23, bei dem die Umgebung der möglichen Übereinstimmung sämtlichen potentiellen Fenstern in dem Ausgangsausschnitt der möglichen Übereinstimmung entspricht, die parallel zur ersten Achse weniger als die erste Schrittgröße von der möglichen Übereinstimmung und parallel zur zweiten Achse weniger als die zweite Schrittgröße von der möglichen Übereinstimmung entfernt sind.

27. Verfahren nach Anspruch 1, bei dem das Suchgebiet ein zweidimensionales Suchgebiet ist, und ferner mit den folgenden Schritten:

> - Ableiten einer dritten Schrittgröße von dem ersten Template und dem gefüllten Template;
> - Ableiten eines teilabgetasteten Suchgebiets unter Verwendung der dritten Schrittgröße als Teilabtastungsfaktor für das Teilabtasten des zweidimensionalen Suchgebiet;
> - Ableiten eines teilabgetasteten Templates unter Verwendung der dritten Schrittgröße als Teilabtastungsfaktor zum Teilabtasten des ersten Templates;
> - wobei ein Fenster des teilabgetasteten Suchgebiets Datenpunkte des teilabgetasteten Suchgebiets enthält, die sich innerhalb eines Bereichs befinden, der durch Überlagern des teilabgetasteten Templates auf das teilabgetastete Suchgebiet bestimmt ist, und wobei eine Gruppe sämtlicher potentieller Fenster des teilabgetasteten Suchgebiets sämtliche potentiellen Bereiche umfaßt, die von dem teilabgetasteten Template überlagert werden können;
> - für jedes Fenster der Gruppe sämtlicher potentieller Fenster des teilabgetasteten Suchgebiets, Korrelieren des ersten Templates mit dem jeweiligen Fenster, um einen Korrelationskoeffizienten abzuleiten; und
> - Identifizieren jedes Fensters der Gruppe sämtlicher potentiellen Fenster, für welche der Korrelationskoeffizient einen vorbestimmten Wert übersteigt, als eine mögliche Position.

28. Verfahren nach Anspruch 27, bei dem das teilabgetastete Suchgebiet mehrere Datenpunkte umfaßt, wobei jeder Datenpunkt der mehreren Datenpunkte $n^2$ Datenpunkten des zweidimensionalen Suchgebiets entspricht, wobei n gleich der dritten Schrittgröße ist, und ferner mit den folgenden Schritten:

> - für jede mögliche Position in dem teilabgetasteten Suchgebiet, Wählen einer ersten Untergruppe von Fenstern in dem zweidimensionalen Suchgebiet, die der einen möglichen Position in dem teilabgetasteten Suchgebiet entspricht, um zumindest eine erste Untergruppe von Fenstern zu bilden;
> - für jede der mindestens einen Untergruppe von Fenstern, Wählen einer zweiten Untergruppe von Fenstern unter Verwendung der ersten Schrittgröße und der zweiten Schrittgröße; und
> - Identifizieren jedes Fensters in der zweiten Untergruppe von Fenstern, das mit dem ersten Template mit einem den vorbestimmten Wert überschreitenden Korrelationskoeffizienten korreliert, als mögliche Übereinstimmung.

29. Verfahren nach Anspruch 28, ferner mit den folgenden Schritten:

> - für jede mögliche Übereinstimmung, Wählen einer dritten Untergruppe von Fenstern in der Nähe der möglichen Übereinstimmung;
> - Korrelieren jedes der Fensterbereiche der gewählten dritten Untergruppe von Fensterbereichen mit dem ersten Template (38).

30. Verfahren nach Anspruch 29, ferner mit dem Schritt des Identifizierens eines oder mehrerer korrelierter Fensterbereiche in der dritten Untergruppe, für welche die Korrelation mit dem ersten Template zu einem einen Schwellenwert übersteigenden Korrelationskoeffizienten führt, als Template-Übereinstimmung.

31. Vorrichtung (10) zum Schätzen einer Position eines ersten Daten-Templates (38) in einem Daten-Suchgebiet (40), wobei das erste Template eine erste Vielzahl von Datenpunkten umfaßt, wobei das Suchgebiet eine zweite Vielzahl von Datenpunkten umfaßt, deren Anzahl die erste Vielzahl von Datenpunkten übersteigt, wobei die Vorrichtung aufweist:

> - eine erste Verarbeitungseinrichtung, welche das erste Template mit mit zusätzlichen Daten füllt, um das Template zu einem gefüllten Template (52'/52") zu erweitern, wobei durch das erste Template ein erster Fensterbereich (54c) in dem gefüllten Template gebildet wird und dieser die erste Vielzahl von Datenpunkten umfaßt; und
> - eine zweite Verarbeitungseinrichtung, welche das erste Template mit Fensterbereichen innerhalb des gefüllten Templates entlang einer ersten Achse (44) um den ersten Fensterbereich korreliert, um eine erste Schrittgröße abzuleiten, und welche das erste Template mit Fensterbereichen Innerhalb des gefüllten Templates entlang einer zweiten Achse (46) um den ersten Fensterbereich korreliert, um eine zweite Schrittgröße abzuleiten;
> - wobei die erste Schrittgröße und die zweite Schrittgröße zum Wählen von Fensterbereichen (42) verwendet werden, um eine Auswertung zum Schätzen der Position des ersten Templates in dem Suchgebiet (40) durchzuführen.

32. Vorrichtung nach Anspruch 31, bei der die zweite Verarbeitungseinrichtung jeweils das erste Template (38) mit einem Fensterbereich einer Untergruppe von potentiellen Fensterbereichen in dem Suchgebiet (40) für jeden Fensterbereich in der Untergruppe der potentiellen Fensterbereiche korreliert, wobei die Untergruppe von potentiellen Fensterbereichen aus sämtlichen potentiellen Fensterbereichen innerhalb des Suchgebiets unter Verwendung der ersten Schrittgröße und/oder der zweiten Schrittgröße gewählt ist, und wobei jede jeweilige von der zweiten Verarbeitungseinrichtung zum jeweiligen Korrelieren des ersten Templates mit jedem der Fensterbereiche der Untergruppe durchgeführte Korrelation zu einem Korrelationskoeffizienten führt;

- wobei die erste Verarbeitungseinrichtung ferner den resultierenden Korrelationskoeffizienten mit einem vorbestimmten Wert für jede der jeweiligen Korrelationen zwischen dem ersten Template und dem einen Fensterbereich in der Untergruppe potentieller Fensterbereiche vergleicht.

**33.** Vorrichtung nach Anspruch 32, bei der die erste Verarbeitungseintichtung jeden Fensterbereich in der Untergruppe als eine potentielle Template-Übereinstimmung identifiziert, bei dem der resultierende Korrelationskoeffizient mindestens so groß wie der vorbestimmte Wert ist.

**34.** Vorrichtung nach Anspruch 33, bei der die Untergruppe von Fensterbereichen eine erste Untergruppe von Fensterbereichen ist, und wobei die erste Verarbeitungseinrichtung eine zweite Untergruppe von Fensterbereichen in dem Suchgebiet in der Nähe einer gegebenen potentiellen Template-Übereinstimmung unter den identifizierten potentiellen Template-Übereinstimmungen wählt, wobei die zweite Verarbeitungseinrichtung ferner jeden der Fensterbereiche in der gewählten zweiten Untergruppe von Fensterbereichen mit dem ersten Template korreliert.

**35.** Vorrichtung nach Anspruch 34, bei der die zweite Verarbeitungseinrichtung als Template-Übereinstimmung einen oder mehrere der korrelierten Fensterbereiche aus der zweiten Untergruppe und dem der lokalen Template-Übereinstimmung entsprechenden Fensterbereich, für den die Korrelation mit dem ersten Template zu einem einen Schwellenwert übersteigenden Korrelationskoeffizienten führt, identifiziert.

**36.** Vorrichtung nach Anspruch 35, bei der nur der korrelierte Fensterbereich aus der zweiten Untergruppe und dem Fensterbereich, weicher der lokalen Template-Übereinstimmung entspricht, für welche die Korrelation mit dem ersten Template zu dem höchsten Korrelationskoeffizienten führt, den Schwellenwert übersteigt.

**37.** Vorrichtung nach Anspruch 31, bei der die zweite Verarbeitungseinrichtung das erste Template mit Fensterbereichen innerhalb des gefüllten Templates korreliert, um eine dritte Schrittgröße abzuleiten, und wobei die erste Schrittgröße, die zweite Schrittgröße und die dritte Schrittgröße zum Wählen von Fensterbereichen verwendet werden, um eine Auswertung zum Schätzen der Position des ersten Templates innerhalb des Suchgebiets durchzuführen.

**38.** Vorrichtung nach Anspruch 37, bei der die erste Achse und die zweite Achse lineare Achsen sind und die dritte Achse eine Drehachse ist.

**39.** Vorrichtung nach Anspruch 37, bei der die erste Achse, die zweite Achse und die dritte Achse orthogonale Raumachsen sind.

**40.** Vorrichtung nach Anspruch 37, bei dem die erste Achse und die zweite Achse lineare Achsen sind und die dritte Achse der Zeit entspricht.

**41.** Vorrichtung nach Anspruch 37, bei dem die erste Achse und die zweite Achse lineare Achsen sind und die dritte Achse der Frequenz entspricht.

**Revendications**

**1.** Procédé de localisation d'une correspondance entre un premier modèle (38) de données et une zone de recherche (40) de données, le premier modèle comportant une première pluralité de points de données, la zone de recherche comportant une seconde pluralité de points de données dépassant en nombre la première pluralité de points de données, le procédé comprenant les étapes consistant à :

remplir le premier modèle (38) à l'aide de données additionnelles pour élargir le modèle en un modèle rempli (52'/52") dans lequel une première zone (54c) de fenêtre à l'intérieur du modèle rempli est formée par le premier modèle et comporte la première pluralité de points de données ;
corréler le premier modèle aux zones de fenêtre à l'intérieur du modèle rempli le long d'un premier axe (44) sur la première zone de fenêtre pour dériver un pas de progression ;
corréler le premier modèle aux zones de fenêtre à l'intérieur du modèle rempli le long d'un deuxième axe (46) sur la première zone de fenêtre pour dériver un deuxième pas de progression ; et
choisir un sous-ensemble de zones de fenêtre à l'intérieur de la zone de recherche (40) pour évaluer une localisation d'une correspondance au premier modèle.

2. Procédé selon la revendication 1, dans lequel l'étape consistant à choisir comprend les étapes consistant à, choisir un sous-ensemble de zones de fenêtre à l'intérieur de la zone de recherche pour le corréler avec le premier modèle, dans lequel le sous-ensemble de zones de fenêtre est choisi en utilisant soit un ou les deux parmi le premier pas de progression et le deuxième pas de progression ; et corréler chacune des zones de fenêtre parmi le sous-ensemble choisi de zones de fenêtre avec le premier modèle.

3. Procédé selon la revendication 1 ou 2, comprenant en outre l'étape consistant à :

identifier en tant que correspondance de modèle éventuelle chacune des zones de fenêtre corrélées pour laquelle la corrélation avec le premier modèle entraîne un coefficient de corrélation dépassant une valeur prédéterminée.

4. Procédé selon la revendication 3, dans lequel le sous-ensemble de zones de fenêtre est un premier sous-ensemble de zones de fenêtre, et comprenant en outre les étapes consistant à :

choisir un second sous-ensemble de zones de fenêtre dans la zone de recherche (40) à proximité d'une correspondance de modèle éventuelle donnée ;
corréler chacune des zones de fenêtre parmi le second sous-ensemble choisi de zones de fenêtre avec le premier modèle.

5. Procédé selon la revendication 4, comprenant en outre l'étape consistant à :

identifier en tant que correspondance de modèle, une ou plusieurs des zones de fenêtre corrélées parmi le second sous-ensemble et la zone de fenêtre correspondant à la correspondance de modèle local pour laquelle la corrélation avec le premier modèle entraîne un coefficient de corrélation qui dépasse une valeur seuil.

6. Procédé selon la revendication 5, dans lequel uniquement la zone de fenêtre corrélée parmi le second sous-ensemble et la zone de fenêtre correspond à la correspondance de modèle local pour laquelle la corrélation avec le premier modèle entraîne un coefficient de corrélation plus élevé qui dépasse la valeur seuil.

7. Procédé selon la revendication 4, 5 ou 6, dans lequel la proximité de la correspondance de modèle éventuelle donnée correspond à toutes les fenêtres éventuelles de la zone de recherche qui sont inférieures au premier pas de progressions existant se déplaçant parallèlement au premier axe et sont inférieures au deuxième pas de progression à distance se déplaçant parallèlement au deuxième axe.

8. Procédé selon la revendication 1, 2, 3, 4, 5, 6 ou 7, dans lequel l'étape consistant à corréler le premier modèle avec les zones de fenêtre à l'intérieur du modèle rempli le long du premier axe sur la première zone de fenêtre comprend les étapes consistant à :

corréler le premier modèle avec les zones de fenêtre à l'intérieur du modèle rempli le long du premier axe sur la première zone de fenêtre pour obtenir un coefficient de corrélation pour chacune desdites zones de fenêtre ;
déterminer une première distance le long du premier axe entre la première zone de fenêtre et une zone de fenêtre le long du premier axe dans une première direction pour laquelle un coefficient de corrélation est conforme à des critères de valeur de coupure ;
déterminer une seconde distance le long du premier axe entre la première zone de fenêtre et une zone de fenêtre le long du premier axe dans une seconde direction opposée à la première direction pour laquelle un coefficient de corrélation est conforme aux critères de valeur de coupure ; et
dériver un premier pas de progression à partir de la première distance et de la seconde distance.

9. Procédé selon la revendication 1, 2, 3, 4, 5, 6, 7 ou 8 dans lequel l'étape consistant à remplir comprend l'étape consistant à :

répéter le premier modèle pour former le modèle rempli à partir de copies multiples du premier modèle.

10. Procédé selon la revendication 1, 2, 3, 4, 5, 6, 7 ou 8 dans lequel l'étape consistant à remplir comprend l'étape consistant à :

dériver une valeur de remplissage de la première pluralité de points de données ;
utiliser la valeur de remplissage en tant qu'une valeur pour chaque point de données ajouté au premier modèle pour former le modèle rempli.

11. Procédé selon la revendication 10, dans lequel l'étape consistant à dériver une valeur de remplissage comprend l'étape consistant à déterminer une moyenne de la première pluralité des points de données, dans laquelle la valeur remplie est la moyenne déterminée.

**12.** Procédé selon la revendication 1, 2, 3, 4, 5, 6, 7, 8, 9, 10 ou 11, comprenant en outre l'étape consistant à corréler le premier modèle avec les zones de fenêtre à l'intérieur du modèle rempli le long d'un troisième axe sur la première zone de fenêtre pour dériver le troisième pas de progression, et dans lequel l'étape consistant à choisir comprend l'utilisation d'un premier pas de progression, d'un deuxième pas de progression et d'un troisième pas de progression pour choisir des fenêtres de la zone de recherche pour évaluer une correspondance de modèle.

**13.** Procédé selon la revendication 12, dans lequel le premier axe et le deuxième axe sont des axes linéaires et le troisième axe est un axe rotatif.

**14.** Procédé selon la revendication 12, dans lequel le premier axe et le deuxième axe sont des axes linéaires et le troisième axe correspond à la durée.

**15.** Procédé selon la revendication 12, dans lequel le premier axe et le deuxième axe sont des axes linéaires et le troisième axe correspond à une fréquence.

**16.** Procédé selon la revendication 12, dans lequel le premier axe, le deuxième axe et le troisième axe sont des axes spatiaux orthogonaux.

**17.** Procédé selon la revendication 1, comprenant en outre les étapes consistant à :

produire un sous-échantillonnage du premier modèle et du modèle rempli pour une pluralité de facteurs de sous-échantillonnage ;
pour chaque facteur de sous-échantillonnage, corréler le premier modèle sous-échantillonné avec une zone de fenêtre à l'intérieur du modèle rempli sous-échantillonné afin d'obtenir un coefficient de corrélation correspondant au facteur de sous-échantillonnage ;
dériver un troisième pas de progression sur la base de chacun des coefficients de corrélation respectifs correspondant aux facteurs de sous-échantillonnage.

**18.** Procédé selon la revendication 1, comprenant en outre les étapes consistant à :

cadrer un parmi le premier modèle et le modèle rempli relativement à l'autre parmi le premier modèle et le modèle rempli pour chacun parmi une pluralité de facteurs de cadrage ;
pour chaque facteur de cadrage, corréler le modèle cadré parmi le premier modèle et le modèle rempli avec l'autre modèle parmi le premier modèle et le modèle rempli au niveau d'une première fenêtre afin d'obtenir un coefficient de corrélation correspondant au facteur de cadrage ;
dériver un troisième pas de progression sur la base de chacun des coefficients de corrélation respectifs correspondant au facteur de cadrage.

**19.** Procédé selon la revendication 1, comprenant en outre l'étape consistant à dériver un troisième pas de progression du premier modèle (38) et du modèle rempli (52'/52") ; dans lequel la zone de recherche (40) est une zone de recherche bidimensionnelle et dans lequel l'étape consistant à choisir le soue-ensemble de zones de fenêtre comprend l'étape consistant à :

dériver des tranches de zones de recherche à partir de la zone de recherche bidimensionnelle pour obtenir une zone de recherche tridimensionnelle, dans laquelle la zone de recherche bidimensionnelle est une tranche de la zone de recherche tridimensionnelle.

**20.** Procédé selon la revendication 19, dans lequel l'étape consistant à utiliser le premier pas de progression, le second pas de progression et le troisième pas de progression comprend en outre les étapes consistant à :

choisir un sous-ensemble de tranches depuis toutes les tranches formant la zone de recherche tridimensionnelle en utilisant le troisième pas de progression ;
pour chaque tranche à l'intérieur du sous-ensemble de tranches, choisir un sous-ensemble de zones de fenêtre à l'intérieur de chacune desdites tranches pour évaluer une localisation d'une correspondance du premier modèle, dans lequel le premier pas de progression et le deuxième pas de progression sont utilisés pour choisir le sous-ensemble de zones de fenêtre ; et
corréler chacune des fenêtres du sous-ensemble choisi de fenêtre avec le premier modèle.

**21.** Procédé selon la revendication 20, comprenant en outre l'étape consistant à :

identifier en tant que correspondance de modèle éventuelle chacune des zones de fenêtre corrélées pour laquelle la corrélation avec le premier modèle entraîne un coefficient de corrélation dépassant une valeur prédéterminée.

**22.** Procédé selon la revendication 21, dans lequel, pour l'une quelconque parmi les correspondances de modèle éventuelles données, il y existe une tranche de départ dans laquelle est localisée une telle correspondance donnée parmi les correspondances de modèle éventuelles, et comprenant en outre les étapes consistant à :

pour chacune des correspondances de modèle éventuelles, projeter ladite correspondance éventuelle sur des tranches avoisinantes à l'intérieur de la zone de recherche tridimensionnelle qui sont inférieures au troisième pas de progression à distance de la tranche de départ de ladite correspondance de modèle éventuelle pour obtenir un sous-ensemble d'essai de fenêtres parmi les tranches avoisinantes,

pour chaque correspondance de modèle éventuelle, corréler le premier modèle avec chaque fenêtre parmi le sous-ensemble d'essai de fenêtre pour ladite correspondance de modèle éventuelle,

identifier en tant qu'une autre correspondance de modèle éventuelle, chacune des fenêtres corrélées parmi le sous-ensemble d'essai de fenêtres pour lesquelles la corrélation avec le premier modèle entraîne un coefficient de corrélation dépassant la valeur prédéterminée, dans laquelle la tranche parmi lesdites tranches avoisinantes qui comportent ladite autre correspondance de modèle éventuelle est la tranche de départ pour ladite autre correspondance de modèle éventuelle.

23. Procédé selon la revendication 22, dans lequel le sous-ensemble de fenêtres est un premier sous-ensemble de fenêtres, dans lequel chaque correspondance de modèle éventuelle et chacune parmi lesdites autres correspondances de modèle est une correspondance candidate, et comprenant en outre les étapes consistant à :

pour chaque correspondance candidate, choisir un second sous-ensemble de fenêtres à proximité de la correspondance candidate ;

corréler chacune des zones de fenêtre parmi le second sous-ensemble choisi de zones de fenêtre avec le premier modèle.

24. Procédé selon la revendication 23, comprenant en outre l'étape consistant à :

identifier en tant qu'une correspondance de modèle une ou plusieurs zones de fenêtre corrélées parmi le second sous-ensemble pour lequel la corrélation avec le premier modèle entraîne un coefficient de corrélation qui dépasse une valeur seuil.

25. Procédé selon la revendication 24, dans lequel la correspondance modèle est choisie afin d'être la fenêtre parmi le second sous-ensemble de fenêtres pour lesquelles la corrélation avec le premier modèle entraîne un coefficient de corrélation plus élevé qui dépasse la valeur seuil.

26. Procédé selon la revendication 23, dans lequel la proximité de ladite correspondance candidate correspond à toutes les fenêtres éventuelles de la tranche de départ de ladite correspondance candidate qui sont inférieures au premier pas de progression à distance de ladite correspondance candidate se déplaçant parallèlement au premier axe et sont inférieures au deuxième pas de progression à distance de ladite correspondance candidate se déplaçant parallèlement au deuxième axe.

27. Procédé selon la revendication 1, dans lequel la zone de recherche est une zone de recherche bidimensionnelle et comprenant en outre les étapes consistant à :

dériver un troisième pas de progression du premier modèle et du modèle rempli ;

dériver une zone de recherche sous-échantillonnée en utilisant le troisième pas de progression en tant que facteur de sous-échantillonnage pour un sous-échantillonnage de la zone de recherche bidimensionnelle ;

dériver un modèle sous-échantillonné en utilisant le troisième pas de progression en tant qu'un facteur de sous-échantillonnage afin de produire un sous-échantillonnage du premier modèle ;

dans lequel, une fenêtre de la zone de recherche sous-échantillonnée comporte des points de données de la zone de recherche sous-échantillonnée qui sont à l'intérieur d'une zone déterminée par un recouvrement du modèle sous-échantillonné sur la zone de recherche sous-échantillonnée, et dans lequel un ensemble de toutes les fenêtres éventuelles de la zone de recherche sous-échantillonnée comporte toutes les zones éventuelles qui peuvent recouvertes par le modèle sous-échantillonné ;

pour chaque fenêtre parmi l'ensemble de toutes les fenêtres éventuelles de la zone de recherche sous-échantillonnée, corréler le premier modèle avec ladite fenêtre afin de dériver un coefficient de corrélation ; et

identifier en tant que localisation candidate chaque fenêtre parmi l'ensemble de toutes les fenêtres éventuelles pour lesquelles le coefficient de corrélation dépasse une valeur prédéterminée.

28. Procédé selon la revendication 27, dans lequel la zone de recherche sous-échantillonnée comprend une pluralité de points de données, chaque point de données parmi la pluralité de points de données correspondant à $n^2$ points de données de la zone de recherche bidimensionnelle, dans lesquels n est égal au troisième pas de progression, et comprenant en outre les étapes consistant à :

pour chaque localisation candidate dans la zone de recherche sous-échantillonnée, choisir un premier sous-ensemble de fenêtres dans la zone de recherche bidimensionnelle correspondant à ladite localisation candidate dans la zone de recherche sous-échantillonnée afin d'obtenir au moins un premier sous-ensemble de fenêtres ;

pour chacun parmi lesdits au moins un sous-ensemble de fenêtres, choisir un second sous-ensemble de fenêtres en utilisant le premier pas de progression et le deuxième pas de progression ; et

identifier en tant que correspondance candidate chaque fenêtre parmi le deuxième sous-ensemble de fenêtres qui est en corrélation avec le premier modèle avec un coefficient de corrélation qui dépasse la valeur prédéterminée.

29. Procédé selon la revendication 28, comprenant en outre les étapes consistant à :

pour chaque correspondance candidate, choisir un troisième sous-ensemble de fenêtres à proximité de la correspondance candidate ;

corréler chacune des zones de fenêtres parmi le troisième sous-ensemble choisi de zones de fenêtres avec le premier modèle (38).

30. Procédé selon la revendication 29, comprenant en outre l'étape consistant à :

identifier en tant qu'une correspondance de modèle une ou plusieurs zones de fenêtre corrélées parmi le troisième sous-ensemble pour lesquelles la corrélation avec le premier modèle entraîne un coefficient de corrélation qui dépasse une valeur seuil.

31. Appareil (10) destiné à estimer une localisation d'un premier modèle (38) de données à l'intérieur d'une zone (40) de recherche de données, le premier modèle comportant une première pluralité de points de données, la zone de recherche comportant une seconde pluralité de points de données dépassant en nombre la première pluralité de points de données, l'appareil comprenant :

un premier moyen de traitement (28) qui remplit le premier modèle de données additionnelles pour élargir le modèle en un modèle rempli (52'/52") dans lequel une première zone (54c) de fenêtre à l'intérieur du modèle rempli est formée par le premier modèle et comporte la première pluralité de points de données ; et

un second moyen de traitement (28) qui corrèle le premier modèle avec les zones de fenêtre à l'intérieur du modèle rempli et le long d'un premier axe (44) sur la première zone de fenêtre pour dériver un premier pas de progression, et qui corrèle le premier modèle avec des zones de fenêtre à l'intérieur du modèle rempli le long d'un deuxième axe (46) sur la première zone de fenêtre pour dériver un deuxième pas de progression ;

dans lequel le premier pas de progression et le deuxième pas de progression sont utilisés pour des zones (42) de fenêtre afin d'évaluer une estimation de la localisation du premier modèle à l'intérieur de la zone de recherche (40).

32. Appareil selon la revendication 31, dans lequel le second moyen de traitement corrèle respectivement le premier modèle (38) avec une zone de fenêtre d'un sous-ensemble de zones de fenêtre éventuelles à l'intérieur de la zone (40) de recherche pour chaque zone de fenêtre à l'intérieur du sous-ensemble de zones de fenêtre éventuelles, dans lesquelles le sous-ensemble de zones de fenêtre éventuelles est choisi à partir de toutes les zones de fenêtre éventuelles à l'intérieur de la zone de recherche en utilisant soit l'un soit les deux parmi le premier pas de progression et le deuxième pas de progression, et dans lequel chaque corrélation respective réalisée par le second moyen de traitement pour corréler respectivement le premier modèle avec chacune desdites zones de fenêtre du sous-ensemble entraîne un coefficient de corrélation ;

dans lequel le premier moyen de traitement compare en outre le coefficient de corrélation résultant avec une valeur prédéterminée pour chacune des corrélations respectives entre le premier modèle et ladite zone de fenêtre à l'intérieur du sous-ensemble de zones de fenêtre éventuelles.

33. Appareil selon la revendication 32, dans lequel le premier moyen de traitement identifie chacune desdites zones de fenêtre à l'intérieur du sous-ensemble en tant qu'une correspondance de modèle éventuelle dans laquelle le coefficient de corrélation résultant est au moins aussi grand que la valeur prédéterminée.

34. Appareil selon la revendication 33, dans lequel le sous-ensemble de zones de fenêtre est un premier sous-ensemble de zones de fenêtre, et dans lequel le premier moyen de traitement choisit un second sous-ensemble de zones de fenêtre dans la zone de recherche à proximité d'une correspondance de modèle éventuelle donnée parmi lesdites correspondances de modèle éventuelles identifiées ; le deuxième moyen de traitement corrèle en outre chacune des zones de fenêtre parmi le deuxième sous-ensemble choisi de zones de fenêtre avec le premier modèle.

**35.** Appareil selon la revendication 34, dans lequel le second moyen de traitement identifie en tant qu'une correspondance de modèle une ou plusieurs des zones de fenêtre corrélées parmi le second sous-ensemble et la zone de fenêtre correspondant à la correspondance de modèle local pour laquelle la corrélation avec premier modèle entraîne un coefficient de corrélation qui dépasse une valeur seuil.

**36.** Appareil selon la revendication 35, dans lequel uniquement la zone de fenêtre corrélée parmi le second sous-ensemble et la zone de fenêtre correspond à la correspondance de modèle local pour laquelle la corrélation avec le premier modèle entraîne un coefficient de corrélation plus élevé qui dépasse la valeur seuil.

**37.** Appareil selon la revendication 31, dans lequel le second moyen de traitement corrèle le premier modèle avec des zones de fenêtre à l'intérieur du modèle rempli afin de dériver un troisième pas de progression, et dans lequel le premier pas de progression, le deuxième pas de progression et le troisième pas de progression sont utilisés pour choisir des zones de fenêtre pour évaluer une estimation de la localisation du premier modèle à l'intérieur de la zone de recherche.

**38.** Appareil selon la revendication 37, dans lequel le premier axe et le deuxième axe sont des axes linéaires et le troisième axe est un axe rotatif.

**39.** Appareil selon la revendication 37, dans lequel le premier axe, le deuxième axe et le troisième axe sont des axes spatiaux orthogonaux.

**40.** Appareil selon la revendication 37, dans lequel le premier axe et le deuxième axe sont des axes linéaires et le troisième axe correspond à une durée.

**41.** Appareil selon la revendication 37, dans lequel le premier axe et le deuxième axe sont des axes linéaires et le troisième axe correspond à une fréquence.

FIG.1

DISPLAY 12

14

16

PROCESSOR 18

MISC. STORAGE 23

NETWORK I/F (E.G.,MODEM; ETHERNET, ISDN) 24

LINK INTO WAN

10

BUS(ES) 32

RAM 20

HARD DIVE DRIVE WITH HARD DISK 22

TRANSPORTABLE STORAGE MEDIA DRIVE 26

TRANSPORTABLE STORAGE MEDIA 28

EP 1 011 065 B1

FIG.2

FIG.3

FIG.4

FIG.5

FIG.6

START

GENERATE PADDED
TEMPLATE
50

FOR WINDOWS OF
PADDED TEMPLATE
ALONG 1st AXIS DO
CORR. BETWEEN
TEMPLATE & WINDOW
60

**FIG.7**

DERIVE 1st AXIS STEP
SIZE
64

FOR WINDOWS OF
PADDED TEMPLATE
ALONG 2nd AXIS DO
CORR. BETWEEN
TEMPLATE & WINDOW
66

DERIVE 2nd AXIS
STEP SIZE
68

# FIG.8

# FIG.9

# FIG.10

CORRELATION
COEFFICIENT

1.0

CUT-OFF
VALUE

56/70/78          58/72/80

62

WIDTH

POSITION
OF CENTER
WINDOW
54C

WINDOW
POSITION
ALONG GIVEN
AXIS (44/46/47)

# FIG.11

# FIG.12

CORRELATION
COEFFICIENT

$(x=0 ; y=0)$

1.0

CUT-OFF
VALUE

WIDTH

$a_1$

$a_2$

$a_1$    $\emptyset$    $a_2$      a

# FIG.13

CORRELATION
COEFFICIENT

LEVEL 1

LEVEL 2

LEVEL 3

1.0

0.5

CUT-OFF
VALUE

2   4   6   8   10   12   14   16    n

**FIG.14**

**FIG.15**

**FIG.16**

# FIG. 17

# FIG. 19

START

76

FIG. 18

OVERLAY TEMPLATE
OVER STARTING
WINDOW OF SEARCH
AREA

78

DO CORRELATION BETWEEN
TEMPLATE & SELECT WINDOW
FOR EVERY +/- Xth POSSIBLE
WINDOW ALONG 1st AXIS (44)
FROM STARTING WINDOW

80

REPEAT PRIOR STEP FOR EVERY
+/- Yth ROW OFFSET ALONG
SECOND AXIS (46) FROM
STARTING WINDOW

82

ANY CORRELATION WHICH
RESULTS IN A CORR.
COEFF. ≥ CUT VALUE *
THRESHHOLD VALUE IS A
LOCAL MATCH

# FIG. 20

# FIG. 21